(19) Europäisches Patentamt
European Patent Office
Office européen des brevets

(11) **EP 4 088 499 B1**

(12) **EUROPEAN PATENT SPECIFICATION**

(45) Date of publication and mention
of the grant of the patent:
**04.09.2024 Bulletin 2024/36**

(21) Application number: **21707017.6**

(22) Date of filing: **12.02.2021**

(51) International Patent Classification (IPC):
*H04W 12/12* (2021.01)    *H04L 9/32* (2006.01)
*H04L 9/00* (2022.01)

(52) Cooperative Patent Classification (CPC):
**H04W 12/12; H04L 9/3239; H04L 9/3247;**
**H04L 9/3297; H04L 9/50;** H04L 2209/56

(86) International application number:
**PCT/IB2021/051159**

(87) International publication number:
**WO 2021/181177 (16.09.2021 Gazette 2021/37)**

(54) **BLOCKCHAIN TRANSACTION DOUBLE SPEND PROOF**

DOPPELAUSGABEBEWEIS FÜR BLOCKCHAIN-TRANSAKTIONEN

PREUVE DE DOUBLE DÉPENSE D'UNE TRANSACTION DE CHAÎNE DE BLOCS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.03.2020 GB 202003658**

(43) Date of publication of application:
**16.11.2022 Bulletin 2022/46**

(60) Divisional application:
**24191234.4**

(73) Proprietor: **nChain Licensing AG**
**6300 Zug (CH)**

(72) Inventors:
• **TARTAN, Chloe**
**London W1W 8AP (GB)**
• **MACKAY, Alexander**
**London W1W 8AP (GB)**
• **WRIGHT, Craig Steven**
**London W1W 8AP (GB)**

(74) Representative: **Page White Farrer**
**Bedford House**
**21a John Street**
**London WC1N 2BF (GB)**

(56) References cited:
• **ZHONG LIN ET AL: "A Flexible Instant Payment System Based on Blockchain", 30 May 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 289 - 306, ISBN: 978-3-319-10403-4, XP047511657**
• **LEWIS GUDGEON ET AL: "SoK: Off The Chain Transactions", vol. 20190410:001850, 3 April 2019 (2019-04-03), pages 1 - 17, XP061032040, Retrieved from the Internet <URL:http://eprint.iacr.org/2019/360.pdf> [retrieved on 20190403]**
• **JOSEPH POON ET AL: "The Bitcoin Lightning Network: Scalable Off-Chain Instant Payments", 14 January 2016 (2016-01-14), XP055358006, Retrieved from the Internet <URL:https://lightning.network/lightning-network-paper.pdf>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present disclosure relates to methods for proving whether a blockchain transaction is a double spend attempt.

Background

A blockchain refers to a form of distributed data structure, wherein a duplicate copy of the blockchain is maintained at each of a plurality of nodes in a peer-to-peer (P2P) network. The blockchain comprises a chain of blocks of data, wherein each block comprises one or more transactions. Each transaction may point back to a preceding transaction in a sequence which may span one or more blocks. Transactions can be submitted to the network to be included in new blocks by a process known as "mining", which involves each of a plurality of mining nodes competing to perform "proof-of-work", i.e. solving a cryptographic puzzle based on a pool of the pending transactions waiting to be included in blocks.

Conventionally the transactions in the blockchain are used to convey a digital asset, i.e. a number of digital tokens. However, a blockchain can also be exploited in order to layer additional functionality on top of the blockchain. For instance, blockchain protocols may allow for storage of additional user data in an output of a transaction. Modern blockchains are increasing the maximum data capacity that can be stored within a single transaction, enabling more complex data to be incorporated. For instance this may be used to store an electronic document in the blockchain, or even audio or video data.

Each node in the network can have any one, two or all of three roles: forwarding, mining and storage. Forwarding nodes propagate transactions throughout the nodes of the network. Mining nodes validate transactions and insert them into candidate blocks for which they attempt to identify a valid proof-of-work solution. Storage nodes each store their own copy of the mined blocks of the blockchain. In order to have a transaction recorded in the blockchain, a party sends the transaction to one of the nodes of the network to be propagated. Mining nodes which receive the transaction may race to mine the transaction into a new block. Each node is configured to respect the same node protocol, which will include one or more conditions for a transaction to be valid. Invalid transactions will not be propagated nor mined into blocks. Assuming the transaction is validated and thereby accepted onto the blockchain, the additional user data will thus remain stored at each of the nodes in the P2P network as an immutable public record.

Zhong et al., "A Flexible Instant Payment System Based on Blockchain", (2019) discloses a payment system in which a depositor who locks an amount of tokens on the blockchain, and supervises payers to make off-chain payments. Therefore, payers can pay to multiple payees off-chain without double-spending.

Gudgeon et al., "Sok: Off The Chain Transactions", (2019) discloses research showing that layer-two protocols enable blockchains to scale without modification on the base layer.

Poon et al., "The Bitcoin Lighting Network: Scalable Off-Chain Instant Payments", (2016) discloses a decentralized system whereby transactions are sent over a network of micropayment channels whose transfer of value occurs off-blockchain.

Summary

One of the fundamental principles of the blockchain is that parties are unable to double spend an unspent transaction output (UTXO). Each blockchain transaction submitted to the blockchain network must contain an input that references an output of a previously submitted transaction, e.g. a transaction that has been accepted onto the blockchain network. To be validated and accepted onto the blockchain network, the referenced output must be an unspent transaction output. If the referenced output has already been spent, the transaction will be rejected. This prevents double spending of outputs that have been recorded on the blockchain.

Blockchain transactions may also be sent peer-to-peer between parties without being transmitted to the blockchain network. That is, a first party may transmit a blockchain transaction via an off-chain side channel to a second party. For example, the blockchain transaction may be a template transaction to which the second party may add an input to the template transaction, e.g. to fund the transaction or to attest to the contents of the transaction. As another example, the second party may add an output to the transaction, e.g. to define a spending condition of the transaction. The second party may complete the transaction and then submit it to the blockchain network to be recorded in the blockchain.

The second party may (intentionally or inadvertently) attempt to double spend the output of a previous transaction referenced by the input of the newly submitted transaction. For example, unbeknownst to the second party, the first party may have included an input in the transaction template that references a previously spent transaction output. When the second party submits the completed transaction to the blockchain network (e.g. after adding an output to the transaction template), the submitted transaction will be rejected. This may have negative consequences for the second party. For instance, the second party may have traded goods or services to the first party in return for digital assets transferred to the second party via the transaction (or at least believed to be transferred to the second party at the time of submitting the transaction to the blockchain). Other potential consequences include being liable to fraud charges or being banned (e.g. blacklisted) from using the blockchain.

There is therefore a need to mitigate the risk of double spend attempts.

According to one aspect disclosed herein, there is provided a computer-implemented method for enabling a second party to determine whether to accept a blockchain transaction from a first party, the method being performed by a first party and comprising: generating a first blockchain transaction, wherein the first blockchain transaction comprises an input for unlocking an output of a blockchain transaction previously transmitted to one or more nodes of a blockchain network for inclusion in the blockchain; generating a signature based on i) the first blockchain transaction and ii) one or more time indicators, each time indicator indicating when the first blockchain transaction was generated and/or transmitted to a second party; and transmitting to the second party, the first blockchain transaction, the signature and the one or more time indicators, wherein at least the first blockchain transaction is transmitted to the second party via an off-chain communication channel, and wherein the second party (103b) is configured to accept the first blockchain transaction based on one or more conditions, a first one of the one or more conditions being that the first party (103a) has transmitted the signature and the one or more first time indicators.

Building on the example provided above, the first party may be a customer and the second party may be a merchant. The first blockchain transaction may be used to transfer a digital asset to the second party in return for goods or services offered by the merchant. The merchant may be set up to accept 0-conf transactions. A "0-conf" transaction is a transaction that has not received any confirmations from any nodes of the network that the transaction has been included in a block of the blockchain.

Returning to the example, the merchant accepts the first blockchain transaction as payment for goods or services without checking that the first blockchain transaction being a "double-spend" attempt. I.e. an input of the first blockchain transaction spends an output of a previous blockchain transaction which has already been spent. Transmitting the first blockchain transaction along with the signature and the indicator (e.g. a timestamp) can prove the order of transaction issuance to mitigate the risk of double-spend attempts. The signature is based on the transaction and the time at which the first transaction is generated and/or transmitted to the merchant. This, in effect, means that the second party attests to the time at which the first blockchain transaction was generated and/or transmitted. In the event of a double spend, the merchant can use the signature as proof that the first party intentionally double-spent the output of the previous transaction. Thus, the appropriate authorities can take action against the first party. The merchant can also use the signature to prove, e.g. to the merchant's bank or insurer, that the merchant has been a victim of fraud.

The problem of double spend attempts also arises in peer-to-peer networks such as Internet-of-Things networks. Peer-to-Peer (P2P) architectures offer a more secure and efficient solution compared to centralised architectures, whereby neighbours interact directly with one-another without using any centralized node or agent between them. Blockchain technology is the foundation for secure P2P communication and is promising to revolutionize the development of IoT systems. Blockchain enables the integration of payment and control into one network; existing infrastructure can be used to piggyback messages regarding device-state changes; and decentralised control of data on the network enables faster user-device interaction. Combined with blockchain technology, traditional IoT devices that perform roles in the physical world will be able to message and exchange value simultaneously. Public blockchains serve as a global payment network as well as a general-purpose commodity ledger with strong cryptographic security built into its protocol that automatically addresses several of the risks associated with IoT. However, if the next generation of blockchain based systems for IoT devices are to become a reality, blockchain-based control methods for IoT need to overcome challenges that are inherent in open systems. These include device control mechanisms that may not be inherent to the blockchain itself. Such a control mechanism is described in GB1915842.7.

In order to guarantee that communication between nodes occurs with minimal latency, IoT control mechanisms may rely on P2P transaction propagation, transaction malleability and 0-conf transactions. However, a malicious or faulty node may wish to have actions performed by other nodes on the network without paying for it, or without wanting the record of the interaction being left on-chain. In this scenario, the malicious node may create a transaction $Tx1$ that contains a command message and that spends some input(s) of a previous transaction. At the same time, the node broadcasts another transaction $Tx1'$ which spends the same inputs, therefore guaranteeing that the network will reject $Tx1$ once it has been finalised by the responding node. Whilst in a trusted network it can be assumed that nodes are not intentionally malicious, the receiver of a partially complete transaction cannot *guarantee* that once they perform the action (based on the command message) and finalise the transaction with an additional signature, that the transaction they broadcast will be accepted. Furthermore, the creator of the partially complete transaction cannot be prevented from re-spending an input if the action has not been performed and the transaction has not been broadcast.

According to another aspect disclosed herein, there is provided a computer-implemented method of determining whether to accept a blockchain transaction from a first party, the method being performed by a second party and comprising: receiving a first blockchain transaction from the first party via an off-chain communication channel, wherein the first blockchain transaction comprises an input for unlocking an output of a blockchain transaction previously transmitted to one or more nodes of a blockchain network for inclusion in the blockchain; determining whether the first party has transmitted, to the second party, (a) a signature generated based on the first blockchain transaction and one or more first time indicators, each first time indicator indicating when the first blockchain transaction was generated and/or transmitted, and (b) the one or more time indicators; and accepting the first blockchain transaction based on one or more conditions, a first one of the one or more conditions being that the first party has transmitted the signature and the one or more first time indicators.

The present invention mitigates against the risk of the double spend attempts caused by malicious actors. To build on the scenarios described above, the first and second parties may be nodes of an IoT network, wherein the first blockchain transaction (a "control transaction") is used by the first party (first node) to instruct the second party (second node) to control an end device. For example, the first node may be a master node whereas the second node may be a slave node. The nodes may be set up to accept and act on 0-conf transactions. In the event that a malicious party has gained control of the first node, the malicious party may attempt to control the second node by replaying a transaction or spending a spent output of a previous transaction. The second node may be set up to only accept control transactions that are accompanied by the signature and indicator. Alternatively, the second node may only accept transactions that are accompanied with a timestamp that indicates a time that is within a threshold of the time at which the first blockchain transaction was received.

It will be appreciated that there are many scenarios where the risk of double spend attempts may arise when blockchain transaction are sent off-chain between parties. The present invention is applicable to all such scenarios.

Brief Description of the Drawings

To assist understanding of embodiments of the present disclosure and to show how such embodiments may be put into effect, reference is made, by way of example only, to the accompanying drawings in which:

Figure 1 is a schematic block diagram of a system for implementing a blockchain;

Figure 2 schematically illustrates some examples of transactions which may be recorded in a blockchain;

Figure 3 is a schematic block diagram of another system for implementing a blockchain;

Figure 4A is a schematic block diagram of a client application,

Figure 4B is a schematic mock-up of an example user interface that may be presented by the client application of Figure 4A,

Figure 5 schematically illustrates the overlap between an IoT network and a blockchain network;

Figure 6 schematically illustrates a hierarchical network topology;

Figures 7a and 7b schematically illustrate example partial and complete command transactions;

Figures 8a and 8b schematically illustrate other example partial and complete command transactions;

Figure 9 schematically illustrates a command request and response cycle, and

Figures 10a and 10b schematically illustrate a command and request cycle whereby a malicious node has issued a double spend command transaction.

Detailed Description of Embodiments

**EXAMPLE SYSTEM OVERVIEW**

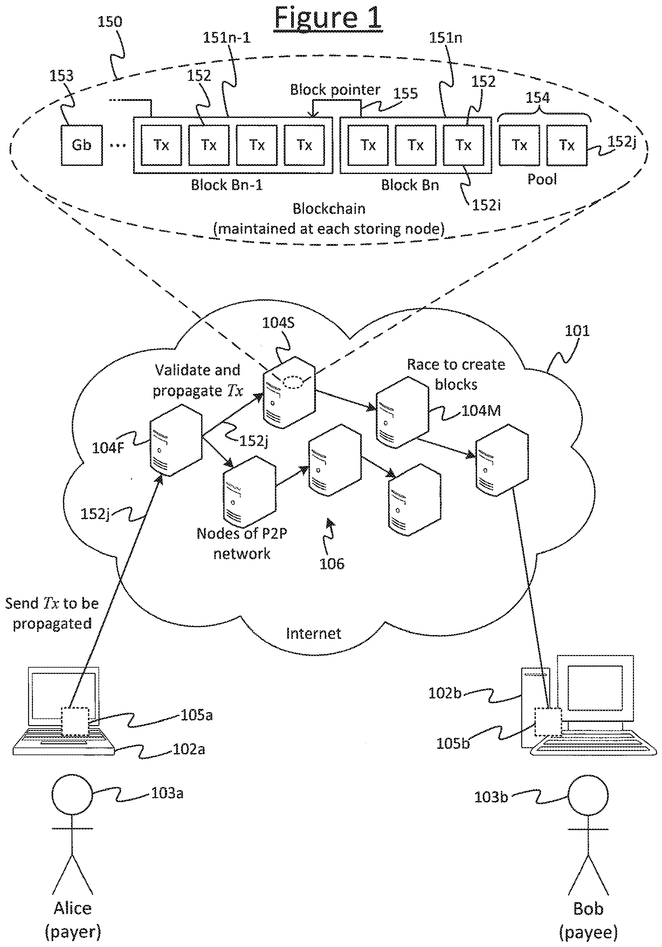

Figure 1 shows an example system 100 for implementing a blockchain 150 generally. The system 100 comprises a packet-switched network 101, typically a wide-area internetwork such as the Internet. The packet-switched network 101 comprises a plurality of nodes 104 arranged to form a peer-to-peer (P2P) overlay network 106 within the packet-switched network 101. Each node 104 comprises computer equipment of a peers, with different ones of the nodes 104 belonging to different peers. Each node 104 comprises processing apparatus comprising one or more processors, e.g. one or more central processing units (CPUs), accelerator processors, application specific processors and/or field programmable gate arrays (FPGAs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of nodes in the P2P network 160. Each block 151 in the chain comprises one or more transactions 152, wherein a transaction in this context refers to a kind of data structure. The nature of the data structure will depend on the type of transaction protocol used as part of a transaction model or scheme. A given blockchain will typically use one particular transaction protocol throughout. In one common type of transaction protocol, the data structure of each transaction 152 comprises at least one input and at least one output. Each output specifies an amount representing a quantity of a digital asset belonging to a user 103 to whom the output is cryptographically locked (requiring a signature of that user in order to be unlocked and thereby redeemed or spent). Each input points back to the output of a preceding transaction 152, thereby linking the transactions.

At least some of the nodes 104 take on the role of forwarding nodes 104F which forward and thereby propagate transactions 152. At least some of the nodes 104 take on the role of miners 104M which mine blocks 151. At least some of the nodes 104 take on the role of storage nodes 104S (sometimes also called "full-copy" nodes), each of which stores a respective copy of the same blockchain 150 in their respective memory. Each miner node 104M also maintains a pool 154 of transactions 152 waiting to be mined into blocks 151. A given node 104 may be a forwarding node 104, miner 104M, storage node 104S or any combination of two or all of these.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the pool 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the signature of the user 103a to whom the output of the preceding transaction 152i is locked. In turn, the output of the present transaction 152j can be cryptographically locked to a new user 103b. The present transaction 152j can thus transfer the amount defined in the input of the preceding transaction 152i to the new user 103b as defined in the output of the present transaction 152j. In some cases a transaction 152 may have multiple outputs to split the input amount between multiple users (one of whom could be the original user 103a in order to give change). In some cases a transaction can also have multiple inputs to gather together the amounts from multiple outputs of one or more preceding transactions, and redistribute to one or more outputs of the current transaction.

The above may be referred to as an "output-based" transaction protocol, sometimes also referred to as an unspent transaction output (UTXO) type protocol (where the outputs are referred to as UTXOs). A user's total balance is not defined in any one number stored in the blockchain, and instead the user needs a special "wallet" application 105 to collate the values of all the UTXOs of that user which are scattered throughout many different transactions 152 in the blockchain 151.

An alternative type of transaction protocol may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored by the miners separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

With either type of transaction protocol, when a user 103 wishes to enact a new transaction 152j, then he/she sends the new transaction from his/her computer terminal 102 to one of the nodes 104 of the P2P network 106 (which nowadays are typically servers or data centres, but could in principle be other user terminals). This node 104 checks whether the transaction is valid according to a node protocol which is applied at each of the nodes 104. The details of the node protocol will correspond to the type of transaction protocol being used in the blockchain 150 in question, together forming the overall transaction model. The node protocol typically requires the node 104 to check that the cryptographic signature in the new transaction 152j matches the expected signature, which depends on the previous transaction 152i in an ordered sequence of transactions 152. In an output-based case, this may comprise checking that the cryptographic signature of the user included in the input of the new transaction 152j matches a condition defined in the output of the preceding transaction 152i which the new transaction spends, wherein this condition typically comprises at least checking that the cryptographic signature in the input of the new transaction 152j unlocks the output of the previous transaction 152i to which the input of the new transaction points. In some transaction protocols the condition may be at least partially defined by a custom script included in the input and/or output. Alternatively it could simply be a fixed by the node protocol alone, or it could be due to a combination of these. Either way, if the new transaction 152j is valid, the current node forwards it to one or more others of the nodes 104 in the P2P network 106. At least some of these nodes 104 also act as forwarding nodes 104F, applying the same test according to the same node protocol, and so forward the new transaction 152j on to one or more further nodes 104, and so forth. In this way the new transaction is propagated throughout the network of nodes 104.

In an output-based model, the definition of whether a given output (e.g. UTXO) is spent is whether it has yet been validly redeemed by the input of another, onward transaction 152j according to the node protocol. Another condition for a transaction to be valid is that the output of the preceding transition 152i which it attempts to spend or redeem has not already been spent/redeemed by another valid transaction. Again if not valid, the transaction 152j will not be propagated or recorded in the blockchain. This guards against double-spending whereby the spender tries to spend the output of the same transaction more than once. An account-based model on the other hand guards against double-spending by maintaining an account balance. Because again there is a defined order of transactions, the account balance has a single defined state at any one time.

In addition to validation, at least some of the nodes 104M also race to be the first to create blocks of transactions in a process known as mining, which is underpinned by "proof of work". At a mining node 104M, new transactions are added to a pool of valid transactions that have not yet appeared in a block. The miners then race to assemble a new valid block 151 of transactions 152 from the pool of transactions 154 by attempting to solve a cryptographic puzzle. Typically this comprises searching for a "nonce" value such that when the nonce is concatenated with the pool of transactions 154 and hashed, then the output of the hash meets a predetermined condition. E.g. the predetermined condition may be that the output of the hash has a certain predefined number of leading zeros. A property of a hash function is that it has an unpredictable output with respect to its input. Therefore this search can only be performed by brute force, thus consuming a substantive amount of processing resource at each node 104M that is trying to solve the puzzle.

The first miner node 104M to solve the puzzle announces this to the network 106, providing the solution as proof which can then be easily checked by the other nodes 104 in the network (once given the solution to a hash it is straightforward to check that it causes the output of the hash to meet the condition). The pool of transactions 154 for which the winner solved the puzzle then becomes recorded as a new block 151 in the blockchain 150 by at least some of the nodes 104 acting as storage nodes 104S, based on having checked the winner's announced solution at each such node. A block pointer 155 is also assigned to the new block 151n pointing back to the previously created block 151n-1 in the chain. The proof-of-work helps reduce the risk of double spending since it takes a large amount of effort to create a new block 151, and as any block containing a double spend is likely to be rejected by other nodes 104, mining nodes 104M are incentivised not to allow double spends to be included in their blocks. Once created, the block 151 cannot be modified since it is recognized and maintained at each of the storing nodes 104S in the P2P network 106 according to the same protocol. The block pointer 155 also imposes a sequential order to the blocks 151. Since the transactions 152 are recorded in the ordered blocks at each storage node 104S in a P2P network 106, this therefore provides an immutable public ledger of the transactions.

Note that different miners 104M racing to solve the puzzle at any given time may be doing so based on different snapshots of the unmined transaction pool 154 at any given time, depending on when they started searching for a solution. Whoever solves their respective puzzle first defines which transactions 152 are included in the next new block 151n, and the current pool 154 of unmined transactions is updated. The miners 104M then continue to race to create a block from the newly defined outstanding pool 154, and so forth. A protocol also exists for resolving any "fork" that may arise, which is where two miners 104M solve their puzzle within a very short time of one another such that a conflicting view of the blockchain gets propagated. In short, whichever prong of the fork grows the longest becomes the definitive blockchain 150.

In most blockchains the winning miner 104M is automatically rewarded with a special kind of new transaction which creates a new quantity of the digital asset out of nowhere (as opposed to normal transactions which transfer an amount of the digital asset from one user to another). Hence the winning node is said to have "mined" a quantity of the digital asset. This special type of transaction is sometime referred to as a "generation" transaction. It automatically forms part of the new block 151n. This reward gives an incentive for the miners 104M to participate in the proof-of-work race. Often a regular (non-generation) transaction 152 will also specify an additional transaction fee in one of its outputs, to further reward the winning miner 104M that created the block 151n in which that transaction was included.

Due to the computational resource involved in mining, typically at least each of the miner nodes 104M takes the form of a server comprising one or more physical server units, or even whole a data centre. Each forwarding node 104M and/or storage node 104S may also take the form of a server or data centre. However in principle any given node 104 could take the form of a user terminal or a group of user terminals networked together.

The memory of each node 104 stores software configured to run on the processing apparatus of the node 104 in order to perform its respective role or roles and handle transactions 152 in accordance with the node protocol. It will be understood that any action attributed herein to a node 104 may be performed by the software run on the processing apparatus of the respective computer equipment. Also, the term "blockchain" as used herein is a generic term that refers to the kind of technology in general, and does not limit to any particular proprietary blockchain, protocol or service.

Also connected to the network 101 is the computer equipment 102 of each of a plurality of parties 103 in the role of consuming users. These act as payers and payees in transactions but do not necessarily participate in mining or propagating transactions on behalf of other parties. They do not necessarily run the mining protocol. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application or software 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective user party 103 to create, sign and send transactions 152 to be propagated throughout the network of nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

The instance of the client application 105 on each computer equipment 102 is operatively coupled to at least one of the forwarding nodes 104F of the P2P network 106. This enables the wallet function of the client 105 to send transactions 152 to the network 106. The client 105 is also able to contact one, some or all of the storage nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. Each node 104 runs software configured to validate transactions 152 according to a node protocol, and in the case of the forwarding nodes 104F to forward transactions 152 in order to propagate them throughout the network 106. The transaction protocol and node protocol correspond to one another, and a given transaction protocol goes with a given node protocol, together implementing a given transaction model. The same transaction protocol is used for all transactions 152 in the blockchain 150 (though the transaction protocol may allow different subtypes of transaction within it). The same node protocol is used by all the nodes 104 in the network 106 (though it many handle different subtypes of transaction differently in accordance with the rules defined for that subtype, and also different nodes may take on different roles and hence implement different corresponding aspects of the protocol).

As mentioned, the blockchain 150 comprises a chain of blocks 151, wherein each block 151 comprises a set of one or more transactions 152 that have been created by a proof-of-work process as discussed previously. Each block 151 also comprises a block pointer 155 pointing back to the previously created block 151 in the chain so as to define a sequential order to the blocks 151. The blockchain 150 also comprises a pool of valid transactions 154 waiting to be included in a new block by the proof-of-work process. Each transaction 152 (other than a generation transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one of the one or more forwarding nodes 104F to which she is connected. E.g. this could be the forwarding node 104F that is nearest or best connected to Alice's computer 102. When any given node 104 receives a new transaction 152j, it handles it in accordance with the node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any storage node 104S that receives the transaction 152j will add the new validated transaction 152 to the pool 154 in the copy of the blockchain 150 maintained at that node 104S. Further, any forwarding node 104F that receives the transaction 152j will propagate the validated transaction 152 onward to one or more other nodes 104 in the P2P network 106. Since each forwarding node 104F applies the same protocol, then assuming the transaction 152j is valid, this means it will soon be propagated throughout the whole P2P network 106.

Once admitted to the pool 154 in the copy of the blockchain 150 maintained at one or more storage nodes 104, then miner nodes 104M will start competing to solve the proof-of-work puzzle on the latest version of the pool 154 including the new transaction 152 (other miners 104M may still be trying to solve the puzzle based on the old view of the pool 154, but whoever gets there first will define where the next new block 151 ends and the new pool 154 starts, and eventually someone will solve the puzzle for a part of the pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

## UTXO-BASED MODEL

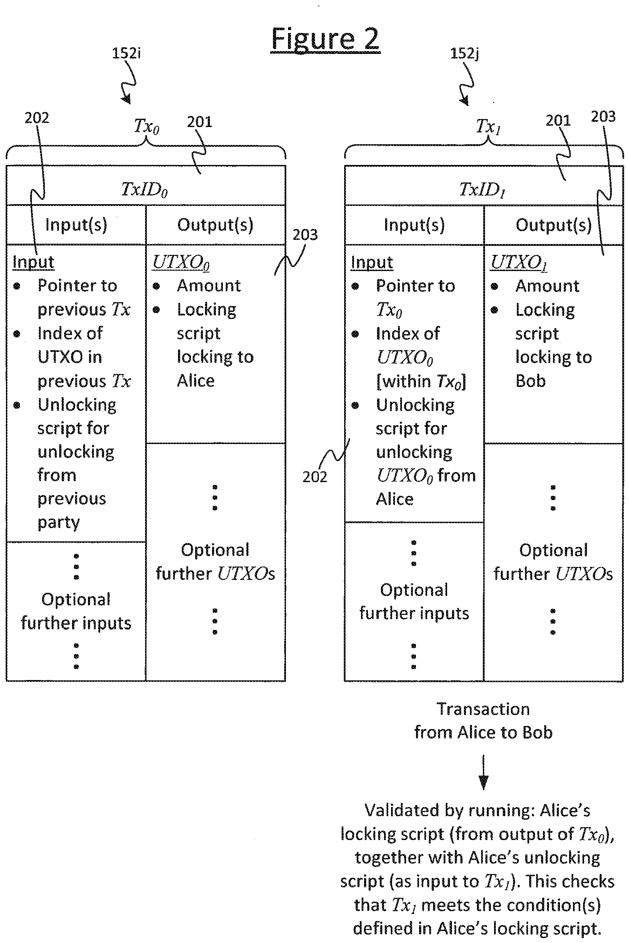

Figure 2 illustrates an example transaction protocol. This is an example of an UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this not limiting to all possible embodiments.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the (distributed) ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the miners 104M.

Note that whilst each output in Figure 2 is shown as a UTXO, a transaction may additionally or alternatively comprise one or more unspendable transaction outputs.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tn_0$ and $Tx_1$ are just an arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in the blockchain 150 at the time when Alice creates her new transaction $Tx_1$, or at least by the time she sends it to the network 106. It may already have been included in one of the blocks 151 at that time, or it may be still waiting in the pool 154 in which case it will soon be included in a new block 151. Alternatively $Tx_0$ and $Tx_1$ could be created and sent to the network 102 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given node 104. Nevertheless, a subsequent transaction (the descendent transaction or "child") which points to a preceding transaction (the antecedent transaction or "parent") will not be validated until and unless the parent transaction is validated. A child that arrives at a node 104 before its parent is considered an orphan. It may be discarded or buffered for a certain time to wait for the parent, depending on the node protocol and/or miner behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S). The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of Txocomprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). What data (or "message") needs to be signed by Alice to provide a valid signature may be defined by the locking script, or by the node protocol, or by a combination of these.

When the new transaction $Tx_1$ arrives at a node 104, the node applies the node protocol. This comprises running the locking script and unlocking script together to check whether the unlocking script meets the condition defined in the locking script (where this condition may comprise one or more criteria). In embodiments this involves concatenating the two scripts:

$$\langle \text{Sig } P_A \rangle \langle P_A \rangle \;||\; [\text{Checksig } P_A]$$

where "||" represents a concatenation and "<...>" means place the data on the stack, and "[...]" is a function comprised by the unlocking script (in this example a stack-based language). Equivalently the scripts may be run one after another, with a common stack, rather than concatenating the scripts. Either way, when run together, the scripts use the public key $P_A$ of Alice, as included in the locking script in the output of $Tx_0$, to authenticate that the locking script in the input of $Tx_1$ contains the signature of Alice signing the expected portion of data. The expected portion of data itself (the "message") also needs to be included in Txoorder to perform this authentication. In embodiments the signed data comprises the whole of $Tx_0$ (so a separate element does to need to be included specifying the signed portion of data in the clear, as it is already inherently present).

The details of authentication by public-private cryptography will be familiar to a person skilled in the art. Basically, if Alice has signed a message by encrypting it with her private key, then given Alice's public key and the message in the clear (the unencrypted message), another entity such as a node 104 is able to authenticate that the encrypted version of the message must have been signed by Alice. Signing typically comprises hashing the message, signing the hash, and tagging this onto the clear version of the message as a signature, thus enabling any holder of the public key to authenticate the signature.

If the unlocking script in $Tx_1$ meets the one or more conditions specified in the locking script of $Tx_0$ (so in the example shown, if Alice's signature is provided in $Tx_1$ and authenticated), then the node 104 deems $Tx_1$ valid. If it is a mining node 104M, this means it will add it to the pool of transactions 154 awaiting proof-of-work. If it is a forwarding node 104F, it will forward the transaction $Tx_1$ to one or more other nodes 104 in the network 106, so that it will be propagated throughout the network. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the node 104 also needs to check whether the referenced UTXO in the preceding transaction $Tx_0$ is already spent (has already formed a valid input to another valid transaction). This is one reason why it is important for the blockchain 150 to impose a defined order on the transactions 152. In practice a given node 104 may maintain a separate database marking which UTXOs 203 in which transactions 152 have been spent, but ultimately what defines whether a UTXO has been spent is whether it has already formed a valid input to another valid transaction in the blockchain 150.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the winning miner, because nowadays the reward of the generation transaction alone is not typically sufficient to motivate mining. If Alice does not include a fee for the miner, $Tx_0$ will likely be rejected by the miner nodes 104M, and hence although technically valid, it will still not be propagated and included in the blockchain 150 (the miner protocol does not force miners 104M to accept transactions 152 if they don't want). In some protocols, the mining fee does not require its own separate output 203 (i.e. does not need a separate UTXO). Instead any different between the total amount pointed to by the input(s) 202 and the total amount of specified in the output(s) 203 of a given transaction 152 is automatically given to the winning miner 104. E.g. say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference automatically goes to the winning miner 104M. Alternatively or additionally however, it is not necessarily excluded that a miner fee could be specified explicitly in its own one of the UTXOs 203 of the transaction 152.

Note also that if the total amount specified in all the outputs 203 of a given transaction 152 is greater than the total amount pointed to by all its inputs 202, this is another basis for invalidity in most transaction models. Therefore such transactions will not be propagated nor mined into blocks 151.

Alice and Bob's digital assets consist of the unspent UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the storage nodes 104S, e.g. the storage node 104S that is closest or best connected to the respective party's computer equipment 102.

Note that the script code is often represented schematically (i.e. not the exact language). For example, one may write [Checksig $P_A$] to mean [Checksig $P_A$] = OP_DUP OP_HASH160 <H(Pa)> OP_EQUALVERIFY OP_CHECKSIG. "OP_..." refers to a particular opcode of the Script language. OP_CHECKSIG (also called "Checksig") is a Script opcode that takes two inputs (signature and public key) and verifies the signature's validity using the Elliptic Curve Digital Signature Algorithm (ECDSA). At runtime, any occurrences of signature ('sig') are removed from the script but additional requirements, such as a hash puzzle, remain in the transaction verified by the 'sig' input. As another example, OP_RETURN is an opcode of the Script language for creating an unspendable output of a transaction that can store metadata within the transaction, and thereby record the metadata immutably in the blockchain 150. E.g. the metadata could comprise a document which it is desired to store in the blockchain.

The signature $P_A$ is a digital signature. In embodiments this is based on the ECDSA using the elliptic curve secp256k1. A digital signature signs a particular piece of data. In embodiments, for a given transaction the signature will sign part of the transaction input, and all or part of the transaction output. The particular parts of the outputs it signs depends on the SIGHASH flag. The SIGHASH flag is a 4-byte code included at the end of a signature to select which outputs are signed (and thus fixed at the time of signing).

The locking script is sometimes called "scriptPubKey" referring to the fact that it comprises the public key of the party to whom the respective transaction is locked. The unlocking script is sometimes called "scriptSig" referring to the fact that it supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

## OPTIONAL SIDE CHANNEL

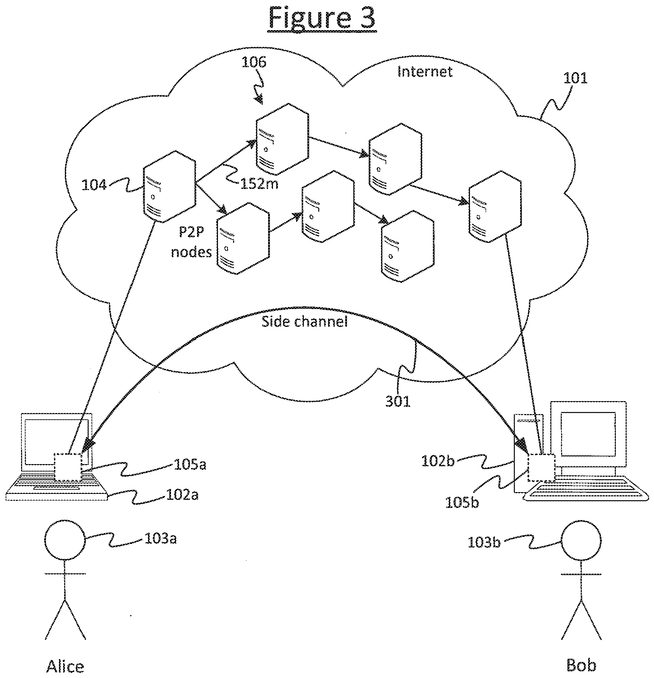

Figure 3 shows a further system 100 for implementing a blockchain 150. The system 100 is substantially the same as that described in relation to Figure 1 except that additional communication functionality is involved. The client application on each of Alice and Bob's computer equipment 102a, 120b, respectively, comprises additional communication functionality. That is, it enables Alice 103a to establish a separate side channel 301 with Bob 103b (at the instigation of either party or a third party). The side channel 301 enables exchange of data separately from the P2P network. Such communication is sometimes referred to as "off-chain". For instance this may be used to exchange a transaction 152 between Alice and Bob without the transaction (yet) being published onto the network P2P 106 or making its way onto the chain 150, until one of the parties chooses to broadcast it to the network 106. Alternatively or additionally, the side channel 301 may be used to exchange any other transaction related data, such as keys, negotiated amounts or terms, data content, etc.

The side channel 301 may be established via the same packet-switched network 101 as the P2P overlay network 106. Alternatively or additionally, the side channel 301 may be established via a different network such as a mobile cellular network, or a local area network such as a local wireless network, or even a direct wired or wireless link between Alice and Bob's devices 1021, 102b. Generally, the side channel 301 as referred to anywhere herein may comprise any one or more links via one or more networking technologies or communication media for exchanging data "off-chain", i.e. separately from the P2P overlay network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

## CLIENT SOFTWARE

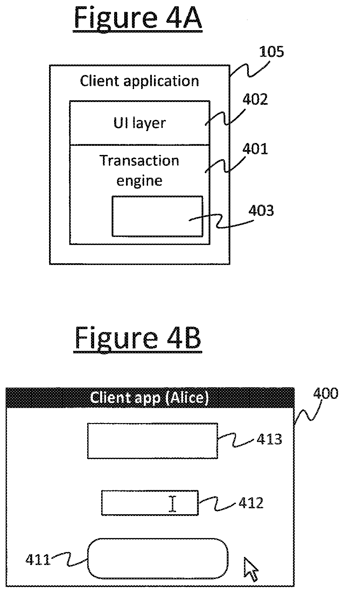

Figure 4A illustrates an example implementation of the client application 105 for implementing embodiments of the presently disclosed scheme. The client application 105 comprises a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to be propagated through the P2P network 106, in accordance with the schemes discussed above and as discussed in further detail shortly.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could comprise one or more display screens (touch or non-touch screen) for providing a visual output, one or more speakers for providing an audio output, and/or one or more haptic output devices for providing a tactile output, etc. The user input means could comprise for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note: whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 4B gives a mock-up of an example of the user interface (UI) 400 which may be rendered by the UI layer 402 of the client application 105a on Alice's equipment 102a. It will be appreciated that a similar UI may be rendered by the client 105b on Bob's equipment 102b, or that of any other party.

By way of illustration Figure 4B shows the UI 400 from Alice's perspective. The UI 400 may comprise one or more UI elements 411, 412, 413 rendered as distinct UI elements via the user output means.

For example, the UI elements may comprise one or more user-selectable elements 411 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands). The options enable the user (Alice) to generate transactions and send them to another user (Bob), and to generate a signature of a transaction in accordance with the described embodiments.

Alternatively or additionally, the UI elements may comprise one or more data entry fields 412, through which the user can input data to be included in the generated transaction and/or a message to be signed. These data entry fields are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may comprise one or more information elements 413 output to output information to the user. E.g. this/these could be rendered on screen or audibly.

It will be appreciated that the particular means of rendering the various UI elements, selecting the options and entering data is not material. The functionality of these UI elements will be discussed in more detail shortly. It will also be appreciated that the UI 400 shown in Figure 4B is only a schematized mock-up and in practice it may comprise one or more further UI elements, which for conciseness are not illustrated.

## DOUBLE SPEND PROOF

Embodiments of the present invention will be described with reference to the example system of Figure 3. A first party (Alice) 103a is configured to communicate with a second party (103b) via an off-chain communication channel, e.g. the side channel 301. It will be understood that some or all of the actions attributed to Alice 103a and Bob 103b are performed by the respective computer equipment of Alice 103a and Bob 103b.

Alice 103a generates a first blockchain transaction $Tx_1$. The first transaction $Tx_1$ contains an input that references an output of a previous transaction. As explained with reference to Figure 2, a previous transaction $Tx_0$ is a transaction that has already been transmitted to one or more nodes 104 of the blockchain network 106. Note that the previous transaction does not necessarily have to have been included in a block of the blockchain 150. It is sufficient for the previous transaction to have been transmitted to one or more nodes 104. When a transaction is submitted to nodes 104 of the network 106, the nodes will first add the transaction to their respective transaction memory pool (also known as a "mempool"). Mining nodes 104M attempt to form a block 151 out of transactions included in the mempool.

Alice 103a also generates a signature of a message. The message is at least partially based on the first transaction $Tx_1$. For example, the message to be signed may comprise part or all of the first transaction $Tx_1$. Additionally or alternatively, the message may comprise a transaction identifier $TxID_1$ of the first transaction $Tx_1$. The message is also at least partially based on one or more time indicators. Each time indicator indicates (or represents, or corresponds to) a time at which the first transaction $Tx_1$ was generated and/or transmitted to the second party 103b. For instance, a time indicator may be a timestamp, e.g. the time (such as the UNIX time) at which the first transaction $Tx_1$ was generated by Alice 103a. As another examples, a time indicator may be a current block height of the blockchain 150. The block height is the number of blocks preceding a particular block 151 on a blockchain 150. For example, the genesis block 153 has a height of zero because zero blocks preceded it. Such a time indicator has, on average, a granularity of ten minutes since new blocks are added to the blockchain 150 approximately every ten minutes at present. A time indicator may in general be any indicator that at least approximately indicates when the transaction was generated or transmitted. Other examples of time indicators include: blockchain related time indicators, e.g. a current total number of transactions submitted to the blockchain, a current total number of unspent transaction outputs (UTXOs) on the blockchain 150, a current blockchain size, a current hash rate, a total number of unique addresses, etc.; and/or blockchain related time indicators, e.g. current date and/or time, the current GBP-USD exchange rate, a company stock price, a snapshot of a stock market index, etc. One, some or all of the above time indicators may be used to generate the signature.

The message may comprise the first transaction $Tx_1$ concatenated with one or more time indicators. Additionally or alternatively, the message may comprise the identifier $TxID_1$ of the first transaction $Tx_1$ concatenated with one the one or more time indicators.

Alice 103a transmits the first transaction $Tx_1$, the signature, and the one or more indicators on which the signature is based, to Bob 103b. Alice 103a sends the first transaction $Tx_1$ to Bob 103b via the side channel 301 (i.e. an off-chain channel). Alice 103a may also send the signature and indicator(s) via the same side channel 301. Alice 103a may instead use a different side channel. In some examples, Alice 103a may include the signature and/or the indicator(s) in a different blockchain transaction and submit that transaction to the blockchain network 106. The different blockchain transaction acts as an immutable record of the signature and indicator(s) in case of a dispute with Bob 103b.

Bob 103b, upon receiving the first transaction from Alice 103a, checks whether Alice 103a has also sent the signature and the time indicator(s). The particular time indicator(s) may be prescribed by Bob 103a or by a protocol to which Alice 103a and Bob 103b (are meant to) adhere.

In general, Alice 103a may use any signature scheme to generate the signature. Preferably Alice 103a signs the message using a private key corresponding to a public key which is associated with (or can be linked to) Alice 103a. Alice 103a may use the Elliptic Curve Digital Signature Algorithm (ECDSA) to sign the message with her private key. The public key may be a certified public key. The public key may be known to, or accessible by, Bob 103b prior to receiving the first transaction.

In some examples, the first transaction may be a partial transaction, i.e. a partially complete blockchain transaction. That is, the partial transaction may be missing one or more inputs and/or outputs that are necessary in order for the transaction to be accepted by the nodes 104 of the blockchain network 106. For example, the partial transaction may not include any outputs. As another example, the partial transaction may include one or more outputs which together lock an amount of digital asset greater than the amount of digital asset unlocked by the input(s) of the partial transaction.

In other examples, the partial transaction may be a transaction that is technically a valid transaction and which could be accepted onto the blockchain, but which can also be added to by the Bob 103b. That is, the partial transaction may be configured to allow Bob 103 to add one or more inputs or one or more outputs to the transaction. Alice 103a can use different signature flags to sign different components of the transaction, thus allowing Bob 103 to add inputs and/or outputs depending on which flag(s) have been used. For instance, the signature flag "SIGHASH_ANYONECANPAY" is a signature hash type which signs only the current input, thus allowing Bob 103b to add other inputs and outputs.

Bob 103a may accept and act on the first transaction $Tx_1$, i.e. perform one or more actions in response to receiving the first transaction. For example, Bob 103a may send something (goods, services, (digital) assets, etc.), or provide access to something (e.g. a transport network, an office or other type of building) to Alice 103a in return for the first transaction $Tx_1$. Additionally or alternatively, Bob 103 may add one or more inputs and/or outputs to the first transaction $Tx_1$ in response to receiving the first transaction $Tx_1$. As another example, Bob 103b may be configured to initiate a process in response to receiving the first transaction $Tx_1$, such as initiating control of a device controllable by Bob 103b. That is, Bob 103b may be configured to control one or more devices which are connected to Bob 103b (e.g. via a wired or wireless connection). Control of devices in response to receiving a transaction will be described below. Any of the above actions may be performed automatically by Bob in response to receiving the first transaction $Tx_1$.

Bob 103a may only act on the first transaction under one or more conditions. That is, Bob 103a may choose whether or not to accept the first transaction only if at least one condition is met. A first condition which has to be met in order for Bob 103a to accept the first transaction is that Alice 103a must have sent the signature (i.e. the signature based on the first transaction and the time indicator(s)) and the time indicator(s) to Bob 103b. The condition may be met if Alice 103a sends the signature and indicator(s) with (e.g. at the same time as) the first transaction. Alternatively, Alice 103a have previously sent the signature and time indicator(s) to Bob 103b if the time indicator(s) indicate when the first transaction was generated. If Alice 103a does not send the signature and time indicator(s), Bob 103b may reject the first transaction.

Another example of a condition that may have to be met in order for Bob 103b to accept the first transaction is that one, some or all of the time indicator(s) indicate that the first transaction was generated and/or transmitted to Bob 103b within a threshold period of time from when Bob 103b actually receives the first transaction. That is, Bob 103b may determine one or more time indicator(s) himself, each of which correspond to one of the time indicators sent by Alice 103a, and then check that there are not any large discrepancies between the received and determined time indicators. For example, Alice 103a may send the UNIX time at which the first transaction was generated. Bob 103b may determine the UNIX time at which the first transaction was received. If the two times differ by more than a predetermined (i.e. specified) threshold, Bob 103b may reject the first transaction.

Another example of a condition that may have to be met in order for Bob 103b to accept the first transaction is that the signature must have been generated using a private key corresponding to a public key associated with Alice 103a. Various techniques for verifying that a signature has been generated using a private key corresponding to a particular public key are known in the art. Bob 103b may use an expected public key to verify that the signature has indeed been signed using the corresponding private key. Bob 103b may already have Alice's public key, or he may access it from a public record. As an example, Alice's public key may be certified by a certificate authority and, for instance, recorded in an (OP_RETURN) output of a blockchain transaction 152. If the signature has not been generated using a private key corresponding to an expected public key, Bob 103b may reject the first transaction.

As described above, the first transaction may be a partial transaction. If one, some or all of the conditions for accepting the first transaction have been met, Bob 103b may add one or more inputs and/or outputs to the first transaction in order to complete the transaction. Bob 103b may then submit the completed transaction to the blockchain network 106. Additionally or alternatively, Bob may send the completed transaction back to Alice 103a. Alice 103a may then submit the completed transaction to the blockchain network 106.

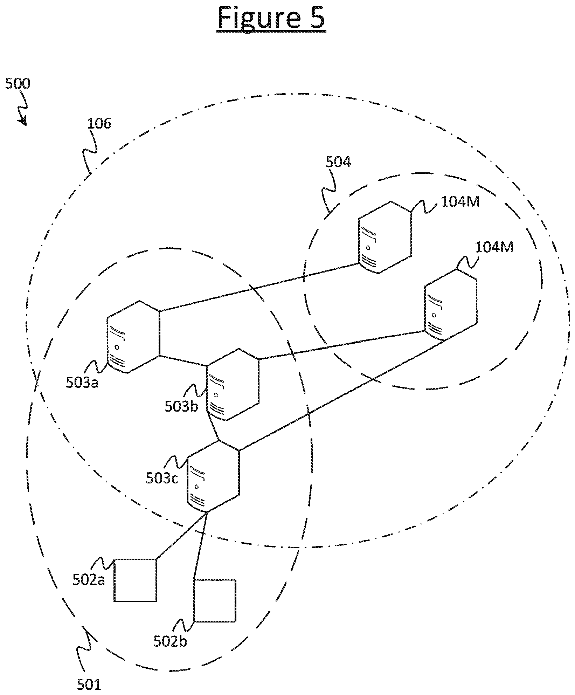

Figure 5 illustrates another example system 500 for implementing embodiments of the present invention. The example system 500 comprises a first network 501 of one or more end devices (i.e. computing devices) 502 and one or more bridging nodes 503 (i.e. computing devices which run a blockchain client application 105 and therefore act as a bridge between the blockchain network 106 and the first network 501). For clarity, the first network 501 will be referred to as an IoT network, i.e. a network of computing devices interconnected by the internet. However, it will be appreciated that the first network need not be an IoT network and, in general, may be any P2P network. Typically the end devices 502 and bridging nodes 503 are embedded in everyday devices. An end device 502 may take one of a variety of forms, e.g. user devices (e.g. smart TVs, smart speakers, toys, wearables, etc.), smart appliances (e.g. fridges, washing machines, ovens, etc.), meters or sensors (e.g. smart thermostats, smart lighting, security sensors, etc.). Similarly, a bridging node 503 may also take a variety of forms, which may include, but is not limited to, the same forms as which an end device may take. A node 503 may also take the form of dedicated server equipment, a base station, an access point, a router, and so on. In some examples, each device may have a fixed network (e.g. IP) address. For instance, one, some or all of the end devices may be a stationary device (e.g. a smart light, or smart central heating controller, etc.), as opposed to a mobile device. In this example system 500, Alice 103a and Bob 103b each take the form of a bridging node 503.

The IoT network is a packet-switched network 101, typically a wide-area internetwork such as the Internet. The nodes 503 and devices 502 of the packet-switched network 101 are arranged to form a peer-to-peer (P2P) overlay network 501 within the packet-switched network 101. Each node 503 comprises respective computer equipment, each comprising respective processing apparatus comprising one or more processors, e.g. one or more central processing units (CPUs), accelerator processors, application specific processors and/or field programmable gate arrays (FPGAs). Each node 503 also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

Each node 503 of the IoT network is also a blockchain node 104. These nodes 503 are arranged as bridging nodes (gateway nodes) which act as a bridge (gateway) between the first network 501 and the blockchain network 106. A blockchain node 104 may be a "listening node". A listening node runs a client application 105 that keeps a full copy of the blockchain, validates and propagate new transactions and blocks but does not actively mine or generate new blocks. Alternatively, a node may be a "simplified payment verification node" (SPV node). An SPV node runs a lightweight client that can generate and broadcast bitcoin transactions and monitor addresses indirectly but does not keep a full copy of the blockchain.

Each node 503 of the IoT network is configured to control an end device 502 either directly or indirectly. A node 503 that is directly connected to an end device 502 can directly control that device. A node 503 that is not directly connected to an end device 502 can only indirectly control that device, e.g. by forwarding a control message to the end node via one or more intermediary nodes. Each node 503 is connected to one or more mining nodes 104M.

Figure 5 also illustrates a network 504 of mining nodes 104M which is a subset of the blockchain network 106. Mining nodes have been discussed above with reference to Figures 1 to 3. The mining nodes 104M are configured to mine valid transactions (e.g. transactions transmitted from the IoT nodes) to the blockchain 150.

As shown in Figure 5, the nodes 503 form part of both the P2P network 501 and the blockchain P2P network 106, whereas the mining nodes 104M form part of only the blockchain P2P network 106. Whilst the end devices 502 are shown in Figure 5 as forming part of only the P2P IoT network 501, it is not excluded that the end devices 502 could also be blockchain nodes 104.

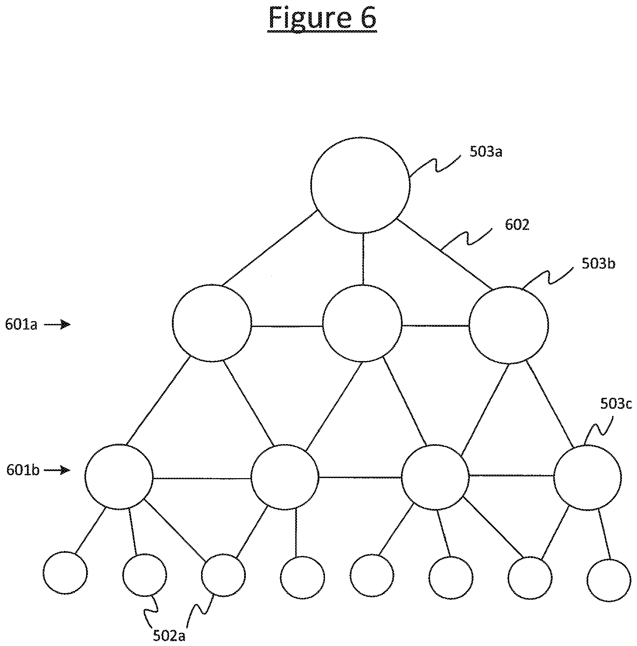

Figure 6 illustrates an example IoT network 501 topology. The IoT network 501 may control a master node 503a, one or more sets 601 of one or more intermediary nodes 503b, 503c, and a set of end devices 502. The master node 502a is configured to control one or more intermediary nodes 503b, 503c. If the IoT network 501 comprises multiple sets (e.g. layers) 601a, 601b of intermediary nodes, the master node 503a is configured to directly control the first set (layer) 601a of intermediary nodes ("server nodes" 503b) and to indirectly control one or more further sets (layers) 601b of intermediary nodes (e.g. a layer of "slave nodes" 503c). The master node 503a is a controlling node with the ability to override and control server and slave nodes. Each server node 503b is a node with the ability to control slave nodes 503c. Each slave node 503c is a node under the control of the server nodes 503b and the master node 503a. As an example, to instruct end device 502a, the master node 503a would issue a command to slave node 503c via servant node 503b.

Whilst the example IoT network of Figure 6 shows only two layers of intermediary nodes (server nodes and slave nodes), other examples may comprise one or more further sets of intermediary nodes, e.g. between the master node 503a and server nodes 503b, and/or between the server nodes 503b and slave nodes 503c. As shown, each node is connected to one or more other nodes via a respective connection 602, and each end device 502 is connected to one or more slave nodes via a respective connection 602. One or more nodes (e.g. the master node) are referred to below as controlling nodes. Each controlling node is a node 503 that can instruct other nodes to perform an action through issuing commands.

The IoT network nodes 503 may correspond to hierarchies in scope of functionality, in superiority of instructions/prerogatives, and/or in span of access. In some implementations, a hierarchical set of SPV nodes implement an "IoT controller" with three levels of hierarchy, corresponding to the master 503a, server 503b and slave nodes 503c of Figures 5 and 6. The master node 503a instructs one or more server nodes 503b, and each server node instructs one or more slave nodes 503c. Each slave node 503c receives instructions from one or more server nodes 503b. Every slave node 503c communicates with one or more IoT end-devices 502, and these are the direct channels of communication between the IoT-controller 503 and the IoT end-devices 502. The states of execution of the IoT controller 503 are recorded in blockchain transactions Tx. Each IoT node - master, server, or slave - has the capacity to create and broadcast corresponding transactions Tx to the blockchain network 106. Each slave node monitors for trigger and/or confirmation signals from end-devices 502, and every IoT node 503 has the capacity to interact with any other IoT node with the purpose of executing the overall logic of the IoT controller.

The master node, server node(s) and slave node(s) can each independently connect to nodes 104 on the blockchain network 106, operate a blockchain wallet 105 (e.g. to watch blockchain addresses) and possibly run a full node (although this is not required). The master node 503a is configured to monitor the activity of other IoT nodes both directly and indirectly under their control, issue commands to these nodes in the form of blockchain transactions Tx and respond to alerts. The server node 503b is configured to watch multiple addresses, including addresses not directly controlled by the server node 503b. Server nodes 503b can be commanded to perform actions by a master node 503a. The slave node 503c is configured to monitor the activities of end devices 502 directly under their control. Slave nodes 503c are under the direct command of server nodes 503b and can also be commanded to perform actions by the master node 503a. The slave nodes 503c act as gateway nodes for the end devices 502 (i.e. a gateway between the end device and the blockchain network 106). The end device 502 is configured to connect to nearby slave devices. They report on end device state using off-chain messaging protocol.

Note that whilst a distinction is made between an IoT node 503 and an end device 502 in that end devices 502 are controlled by IoT nodes 503 but do not themselves control IoT nodes 503, an end device 502 may also be a node 104 of the blockchain network 106. That is, in some examples an end device 502 may operate a blockchain protocol client or wallet application 105.

The IoT network 501 strikes a balance between centralisation and decentralisation by combining a command and control hierarchy with use of a blockchain network infrastructure. Users of the network 501 may create their own multilevel control hierarchy which includes client-server as well as peer-to-peer relationships between devices. The network architecture comprises three layers: an IoT network 501, a blockchain P2P network 104 (i.e. full and lightweight blockchain clients, e.g. the master, servant and slave nodes are lightweight clients operating SPV wallets 105), and a blockchain mining network 504 (a subset of the blockchain P2P network that validates, propagates and stores the transactions propagated by the IoT nodes). The blockchain network 106 acts as backend infrastructure and there is an overlap between the IoT network 501 and the blockchain P2P network 106.

The first network (e.g. an IoT network) comprises one or more bridging nodes and one or more devices which can be controlled by one or more of the bridging nodes. The bridging nodes are also nodes of a blockchain network. That is, they are part of the IoT network and the blockchain network in the sense that they can connect both to the IoT network (e.g. to communicate with other network nodes and devices) and to the blockchain network (e.g. to transmit transactions to the blockchain and to identify and read from transactions recorded on the blockchain). These nodes act as a gateway or bridge between the first network and the blockchain network. They need not also have the roles of mining nodes, forwarding nodes or storage nodes of the blockchain network, though that is not excluded either. In some examples, one or more of the devices s of the first network may also be a node of the blockchain network.

A requesting node (the first bridging node) generates a blockchain transaction (the first transaction). The transaction is signed by the requesting node and contains an output that includes command data. The command data includes an identifier of the device to be controlled, and a command message specifying the command. For example, the device may be a smart washing machine, and the command message may be an instruction to start a washing cycle. The transaction may be transmitted to the blockchain and/or transmitted off-chain to a second node (e.g. a responding node or an approval node). A responding node is a bridging node that directly controls the end device having the specified identifier. An approval node is a bridging node which has authority to grant approval of the command to control the end device. To continue with the washing machine example, the second node may be a smart home hub which controls the washing machine. The first node may be, for instance, a user device such as a laptop, mobile phone, etc.

The first blockchain transaction may be a partially complete transaction. Partially complete in this context means that additional inputs (e.g. signatures) may need to be added to complete the transaction. In some instances, the partial transaction may be invalid without the additional inputs, meaning that if it was transmitted to the blockchain network it would be rejected by the network.

The responding node obtains the first transaction, e.g. from the blockchain itself (it the first transaction has been transmitted to the blockchain) or directly from the requesting node. The responding node then identifies the device to be controlled using the device identifier in the command data, and the command message specifying the command. The responding node then transmits the command to the identified end device. In other words, the responding node instructs the end device to perform an action based on the command data in the first transaction.

Preferably, the responding node updates the first blockchain transaction by signing the obtained first transaction, and then transmits the updated transaction to the blockchain network. The updated transaction acts as a record of the command request and an acknowledgement of the command being carried out by the end device.

The blockchain transactions are a template for digitally signed messages that can be propagated across a global network without discrimination. Nodes use the blockchain as a data carrier network by encoding commands, status updates and other related actions into an output of a transaction (e.g. an unspendable output). In order to minimize communication latency, transactions encoding command data are sent peer-to-peer (i.e. between nodes directly) before being broadcast to the blockchain network.

Together, the bridging nodes of the first network operate a decentralised IoT communication protocol using blockchain transactions. Blockchain protocols allow for high capacity and low fee microtransaction throughput as well as a scalable network infrastructure, thus allowing devices to be connected reliably and at a global scale, while communicating at minimal costs. By combining a multilevel control hierarchy and a blockchain based communication protocol, the request and IoT communication protocol provides for: large scale P2P communication using low-fee microtransactions, integration of value transfer and control into one platform, low barriers to entry for IoT network devices, secure timestamped storage of IoT communication data, and IoT metadata accessible for auditing and performance monitoring.

Embodiments of the present disclosure provide for a protocol for nodes of a network (e.g. an IoT network) 501 to use blockchain transactions Tx to issue command requests, instruct devices based on those command requests and issue command acknowledgements. Whilst embodiments will be described with respect to an IoT network 501, in general, the teaching of the present disclosure could be applied to any network comprising nodes which operate a blockchain protocol client application 105, and end devices controllable by at least a subset of those nodes.

A first bridging node 503 of the network 501 (e.g. master node 503a, or server node 503b) generates a first transaction $Tx_1$ which comprises an input signed by the first node and an output comprising command data. The command data comprises an identifier of an end device 502 to be controlled and a command message for controlling the end device 502. The first node may be the originator of the command. That is, the first node may generate the command data.

The first node may transmit the first transaction $Tx_1$ to a second bridging node 503 of the first network 501 (e.g. slave node 503c) that controls the end device 502. The first transaction $Tx_1$ may be transmitted off-chain, i.e. without being transmitted to the blockchain. For instance, the first transaction $Tx_1$ may be sent directly from the first node to the second node, e.g. over the internet. For example, the first node may be a server node 503b and the second node may be a slave node 503c. Alternatively, the first transaction $Tx_1$ may be sent indirectly, e.g. via one or more intermediary nodes. As an example, the first transaction $Tx_1$ may be sent from a master node 503a to a slave node 503c via a server node 503b. The second node may be connected to the end device 502 via a wired or wireless connection, e.g. via an Ethernet or Wi-Fi connection.

Referring to Figures 1 to 3, in these examples the first node may be comprised by the computer equipment 102a of Alice 103a and the second node may be comprised by the computer equipment 102b of Bob 103b. As explained previously, Alice and Bob may use a side channel (e.g. side channel 301) to exchange a transaction without the transaction (yet) being published onto the blockchain network 106 or making its way onto the chain 150, until one of the parties chooses to broadcast it to the network 106.

The second node may obtain the first transaction $Tx_1$ directly or indirectly from the first node, e.g. the first transaction $Tx_1$ may be forwarded to the second node via one or more intermediary nodes. The second node uses the command data to transmit a control instruction to the end device 502 identified by the device identifier ("*Device ID*") in the command data. The control message in the command data may define a desired action of the end device 502. The control message may be configured to cause the second node to transmit a particular one of several possible instructions to the end device 502.

Alternatively, the second node may be configured to send a single instruction to the end device 502, i.e. the second node only ever sends the same instruction to the end device. This may be the case, for instance, if the end device 502 is a simple device like a sensor, and the instruction is a request for a sensor reading. The command (i.e. the instruction for the end device) may be transmitted to the device off-chain over a wired or wireless connection, e.g. using Wi-Fi. Alternatively, if the device is also a node of the network, the command may be transmitted via a blockchain transaction Tx.

In some embodiments, a request and response cycle for device and controller communication may be implemented by the first and second nodes. The request (command) is issued as a partially complete transaction containing an output which comprises the command data (e.g. an OP_RETURN payload). The response (acknowledgment of the command) is the broadcasting of a finalised transaction containing the signature of both the requester and responder nodes. Transaction malleability enables this method of communication as the message receiver can add inputs and outputs whilst unable to alter the command data (e.g. the OP_RETURN payload).

The first transaction $Tx_1$ transmitted from the first node to the second node may be transmitted without a second output. I.e. the transaction comprises a single output (the output comprising the command data). In order to complete the partial transaction, the second may update the transaction by adding an input and an output to the first transaction. The input comprises a signature of the second node, i.e. a signature generated using a private key of the second node. The output is an output locked to a public key of the second node, e.g. a P2PKH output. To spend a P2PKH output, an input of the spending transaction must comprise a public key such that the hash (e.g. OP_HASH160) of the public key matches the public key hash in the P2PKH output. A P2PKH output challenges the spender to provide two items: a public key such that the hash of the public key matches the address in the P2PKH output, and a signature that is valid for the public key and the transaction message, not necessarily in that order. The public key may correspond to the private key used to generate the signature. Alternatively, the signature may be linked to a first public key, and the output may be locked to a different public key. The second node may then transmit the completed transaction to the blockchain network 106. The completed transaction (referred to as a command transaction in these embodiments) is available in the blockchain 150 for other nodes to view, e.g. the first node, and acts as a record of the command carried out by the device. That is, once a transaction is broadcast, an independent observer can see which public key issued the command/message and which public key responded to it.

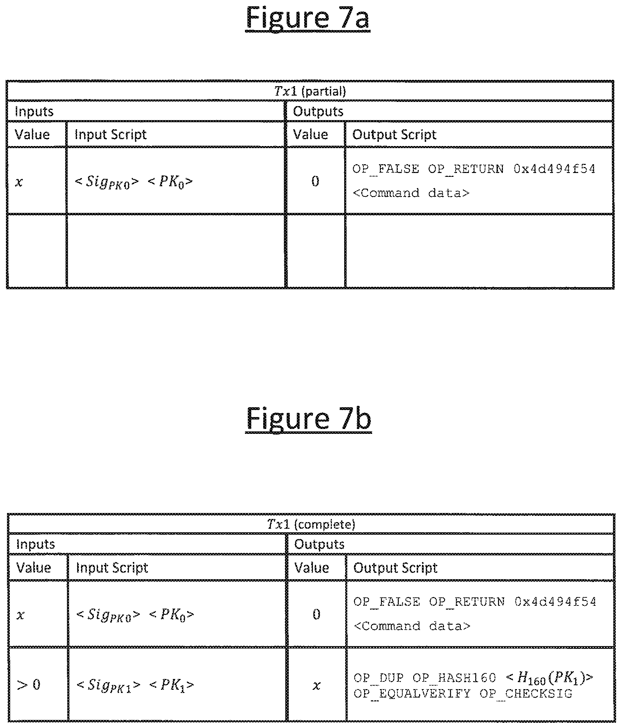

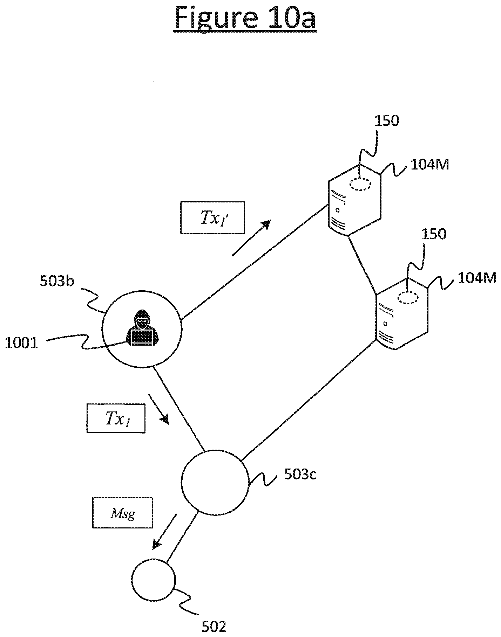

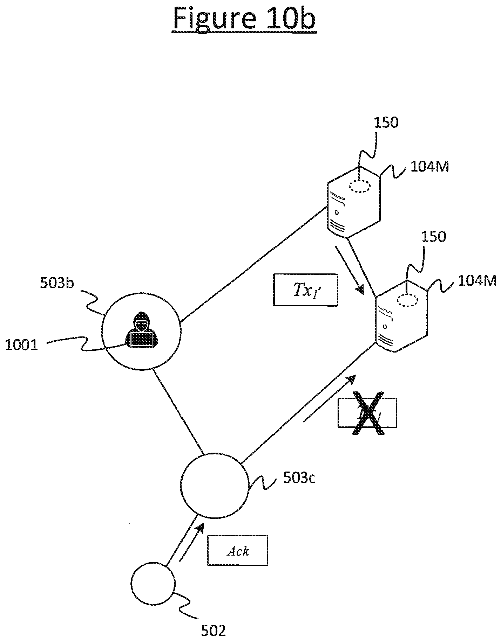

Figures 7a and 7b illustrate an example partial first transaction $Tx_1$ (*partial*) and an example updated first transaction $Tx_1$ (*complete*). The partial first transaction comprises a single input 701a and a single output 702a. The updated first transaction includes the input 701b and output 702b added by the second node. A SIGHASH_SINGLE signature type can be used to achieve the desired level of transaction malleability. For example, a node with public key $PK_0$ sends an instruction to a node with public key $PK_1$. The instruction is encoded in an unspendable output (e.g. an OP_RETURN output) of a transaction signed using SIGHASH_SINGLE signature type (Fig. 10a). The partially complete transaction is valid. On completion of the instruction, the second node with $PK_1$ adds an output locked to their address. The second node with $PK_1$ then finalises the transaction by signing the entire transaction using SIGHASH_ALL signature type (see Fig.10b).

In alternative embodiments, the first transaction $Tx_1$ transmitted from the first node to the second node may be transmitted with a second output. The second output is locked to a public key of the second node. For example, the second output may be a P2PKH to the second node's public key.

In order to complete the first transaction $Tx_1$, the second node updates the first transaction by adding an input to the first transaction. The first transaction $Tx_1$ now includes two inputs and two outputs. The second input comprises a public key of the second node. The public key in the second input may or may not be the same as the public key to which the second output is locked. Once completed, the updated first transaction (referred to as a command transaction in these embodiments) is sent to the blockchain network 106 for inclusion in the blockchain 150. Once a command transaction is broadcast any independent observer can see which public key issued the command/message and which public key responded to it.

The second output locked to the public key of the second node may transfer an amount of the digital asset which is greater than the amount of the digital asset referenced by the first input of the first transaction. In that case, the first transaction $Tx_1$ is a partially complete transaction that would not be deemed valid by other nodes of the blockchain network 106. That is, the first transaction $Tx_1$ would not satisfy the consensus rules followed by the blockchain nodes and thus would not be mined into a block 152 of the blockchain 150. When updating the first transaction $Tx_1$, the second node would have to ensure that the combined amount of digital asset referenced by the first and second inputs is greater than the amount of the digital asset locked to the second output.

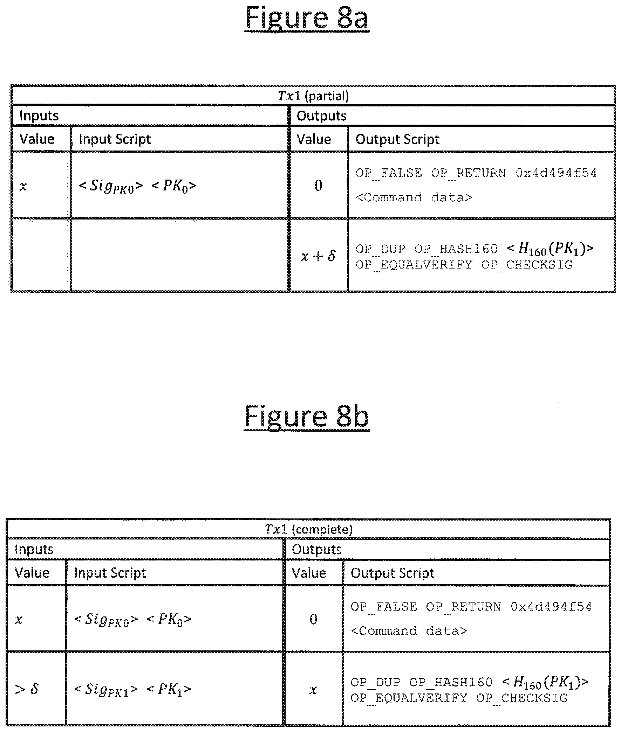

Figures 8a and 8b illustrate an example partial first transaction $Tx_1$ (*partial*) and an example updated first transaction $Tx_1$ (*complete*). The first transaction includes the command data in a first output 802a and a second output 802b locked to the public key of the second node. The updated first transaction includes the additional input 801b added by the second node. If the first node with $PK_0$ sends an instruction to the second node with $PK_1$ that they want carried out by the second node with $PK_1$ only, they can send a partially complete transaction which locks both outputs 802a, 802b but does not pay a fee (and therefore will not be mined or propagated). In order to redeem the digital asset locked to $PK_1$, the second node with $PK_1$ will need to provide an input 801b that pays the fee. To issue a command using a partially complete transaction, the SIGHASH flag for < $Sig_{PK_0}$> is set to SIGHASH_ANYONECANPAY and contains an OP_RETURN output with the command data. This means that, whilst the command data included in the first output 802a is fixed, anyone can add an additional input. The public key that received the command can add an additional input 801b to redeem the funds in the input 801a. To secure the new input 801b and prevent further transaction malleability the receiver of the funds adds a minimal value (dust) input and signs the transaction outputs using SIGHASH_ALL.

Note that a SIGHASH flag is a flag added to signatures in transaction inputs to indicate which part of the transaction the signature signs. The default is SIGHASH_ALL (all parts of the transaction other than the ScriptSig are signed). The unsigned parts of the transaction can be modified.

In more detail, a SIGHASH flag is a single byte appended to the end of a signature i.e. if SIG is the signature found in the transaction then SIG = [DER encoded ECDSA signature] + [1-byte SIGHASH flag]. The SIGHASH 1-byte is also appended to the transaction before creating the hash value, i.e. ECDSA Sig = [r s] where

$$s = k^{-1}(H(Tx||SIGHASH) + sk \cdot r)$$

$sk$ and $k$ are private and ephemeral keys, respectively.

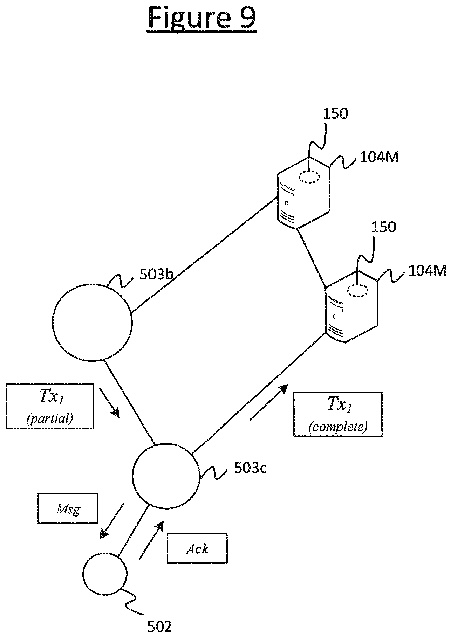

An example request and response algorithm is provided below, with reference to Figures 9, 10a and 10b. A controlling device 503b is configured to communicate with other nodes on the network 501 and can calculate the shortest route of communication to any other node on the network. For example, $PK_{serv}$ identifies that $PK_{slave}$ is the nearest controller to a device with *device_ID.*

Step 1: A controlling device 503b with public key $PK_{serv}$ sends a partial command $Tx_1$ (see Fig. 10a) to a second controlling device 503c with public key $PK_{slave}$. The IoT message contained in the transaction specifies the command and target device with *device_ID.*

Step 2: The second controlling device ($PK_{slave}$) checks that the signature for the transaction is valid and that the message contained within the IoT message payload is valid in accordance with the rules of the network 501.

Step 3. The second controlling device ($PK_{slave}$) sends a command message ("Msg") to the device (*device_ID*) via off chain communication (e.g. wired connection, Bluetooth, IP-to-IP).

Step 4: Upon completion of the command requested action, the device (*device_ID*) sends a command completion or acknowledgment message ("ack") back to the second controlling device ($PK_{slave}$).

Step 5: The second controller ($PK_{slave}$) adds a second input and signature and finalises the transaction (see Fig. 10b). This will signal that the second controller confirms the completion of the command.

Step 6: The second controller ($PK_{slave}$) broadcasts the finalised transaction to the blockchain (mining) network 504.

When the second node (e.g. a slave node) obtains a command transaction, the second node transmits a command (Msg) to the device identified by the device identifier (*Device_ID*) in the command data. In some examples, the device 502 may transit an acknowledgement message (Ack) to the second node to indicate that it has received the command and/or that it has actioned the command. In these examples, the second node may only update the first transaction (and then broadcast the updated transaction) on condition that it has received an acknowledgement from the device. This provides further supporting evidence of the end device has executed a command.

Due to resource constraints that most everyday small electronic devices have, they may not be able to easily monitor the blockchain 150 and/or even communicate with IoT network components outside of their immediate location, and therefore the control of end devices 502 is performed locally (second node to device) and off-chain. Messages to and from end devices may take the form of the raw command data (e.g. OP_RETURN payloads) without the additional transaction metadata. This ensures that the data packets containing the messages remain small and computationally intensive operations (such as elliptic curve mathematics) are not required. In some embodiments, the command data included in the transactions is encrypted.

In summary, nodes 503 on the IoT network 501 communicate directly using transactions containing IoT command data, as well as by connecting to the blockchain network 106 to broadcast transactions. The blockchain 150 is used as a permanent data store for recording commands and status updates from IoT network components as well as issuing reports and alerts related to IoT devices 502. The protocol may make use of one or more of the following features.

As set out above, Alice 103a and Bob 103b may each perform actions associated with the bridging nodes 503 of Figure 5. That is, Alice 103a and Bob 103 may each comprise or operate a respective bridging node. Alice may be a master node 503a or an intermediate node 503b, whereas Bob may be an intermediate node 503b, 503c. In the scenario shown in Figure 9, Alice 103a operates a server node 503b and transmits a partial transaction $Tx_1$ to Bob 103b who operates a slave node 503c. The partial transaction $Tx_1$ comprises a command for controlling an end device 502. In a fully trusted system, Bob 103b can assume that Alice 103a is not acting maliciously and therefore accept the partial transaction $Tx_1$, control the end device 502 based on the command, and submit a completed transaction $Tx_1$ to the blockchain network 106 in order to store a record of the command on the blockchain 150. However, the system may not be a fully trusted system, or it may be susceptible to faulty nodes.

Figures 10a and 10b illustrate an example system which has been compromised by a malicious actor 1001. In the example of Figure 10a, the server node 503b issuing the partial transaction $Tx_1$ to the slave node 503c is controlled by the malicious actor 1001. The malicious actor 1001 commands the server node 503b to issue the command transaction $Tx_1$ to the slave node 503c and at the same time submits the same command transaction $Txi$ to the blockchain network 106. That is, the malicious actor 1001 issues a double spend transaction. Not knowing that the command transaction $Tx_1$ is a double spend, the slave node 503 instructs the end device 502 to carry out the command. The transaction $Tx_1$' will reach the blockchain network 106 before the slave node 503c has a chance to send the complete transaction $Tx_1$ to the blockchain network 106, as shown in Figure 10b. In the example of Figure 10b, the end device 502 returns an acknowledgement message to the slave node 503c. In response, the slave node 503c completes the command transaction $Tx_1$ and submits it to the blockchain network 106. However, the command transaction $Tx_1$' issued by the server node 502b controlled by the malicious actor 1001 has already been propagated to other nodes 104M of the blockchain network 106. Therefore, when these nodes 104M receive the command transaction $Tx_1$ from the slave node 503c, they will reject it as it will be a double spend attempt. This means there will not be any record on the blockchain of the command being carried out.

In order to mitigate the risk of double spend transactions, Bob 103b (e.g. the slave node 503c) requires Alice 130a (e.g. the server node 503b) to send a signature of the command transaction and one or more time indicator(s). In some examples, a condition for Bob 103b instructing an end device 502 under his control to carry out a command is that the Alice 103a has sent the signature and the time indicator(s) with the command transaction. If Alice 103a does not send the signature and the time indicator(s), Bob 103b may reject the command transaction and not issue the command to the end device 502. As another example, Bob 103b may only update the command transaction, e.g. complete the command transaction if Alice 103a has sent the signature and the time indicator(s) with the (partial) command transaction. If Alice 103a does not send the signature and the time indicator(s), Bob 103b may reject the command transaction and not update the command transaction. In this manner, a malicious actor 1001 cannot cause Bob 103b to control end devices to carry out commands without any record of the commands being recorded on the blockchain 150.

In some examples, Bob 103b may only update the partial transaction and submit it to the blockchain network 106 once the command instruction (or message) has been transmitted to the end device. In other examples, Bob 103b may only update the partial transaction and submit it to the blockchain network 106 once he receives an acknowledgement from the end device that the instruction has been performed.

In summary, while 0-conf double spend attempts cannot be fully prevented, the present invention proves the order of transaction issuance in order to mitigate the risk of a double spend attempt. As a particular example, assuming that $Node_1$ wishes to issue a command by propagating a transaction $Tx1$ to $Node_2$, the partially complete transaction $Tx1$ is sent from $Node_1$ to $Node_2$ along with two other pieces of data: a signature and a timestamp

$$Sig(TxID1||t), t, \ Tx1$$

Where $TxID1 = H^2(Tx1)$ (transaction ID), $H(\cdot)$ is a hash function, and $t$ is the UNIX time. More specifically, $H^2(Tx1) = SHA256(SHA256(Tx1))$. This additional signature and timestamp can be stored and later used as proof that $Node_1$ sent $Tx1$ to $Node_2$ at approximately time t. In the event of a double spend, this additional data can be used to penalise $Node_1$ or at least assess network performance issues should the double spend be executed by a non-malicious node. Note that in the context of the IoT network 501, P2P replay attacks are equivalent to a double spend attack in the blockchain network 106. The inclusion of a timestamp in command transactions prevents playback of authentic data since a large discrepancy in the time of data transmission would be easily detected by the recipient node. In some examples, all devices on a network (e.g. bridging nodes and end devices of an IoT network) are configured to keep a local timestamped list of TxIDs from when they are first seen on that network.

Transmitting via an off-chain communication channel means transmitting via a channel other than the blockchain network. For instance, transmitting the blockchain transaction via an off-chain communication channel means transmitting the transaction without sending it to nodes of the blockchain network for inclusion in the blockchain. As an example, the transaction may be sent via TLS communication, email, a messaging application, Wi-Fi, Bluetooth, NFC, etc.

The blockchain may comprise the previous blockchain transaction. Alternatively, the previous blockchain transaction may be a transaction in a respective memory pool (mempool) of the one or more nodes of the blockchain network.

The off-chain communication channel used to transmit the signature and/or the at least one time indicator may be the same communication channel or different communication channels.

In embodiments, the signature may be generated using a private key corresponding to a public key associated with the first party.

In embodiments, the first blockchain transaction may be a partial blockchain transaction that requires one or more inputs and/or one or more inputs to be added to the partial blockchain transaction in order for the partial blockchain transaction to be accepted by one or more nodes of the blockchain network.

Note that a partial blockchain transaction may also be referred to as a partially complete blockchain transaction.

In embodiments, the second party may be configured to control one or more devices, wherein the first blockchain transaction comprises an output comprising command data, and wherein the command data comprises a command message for causing the second party to control at least one of the one or more devices.

The command message may be configured to cause the second party to transmit a control instruction to the at least one of the one or more device. The command message may be encrypted.

In embodiments, the first party and second party may be respective nodes of a first network, the first network being a peer-to-peer network.

In embodiments, the first network and the blockchain network may be different networks.

In embodiments, the first and second parties may be respective nodes of the first network and the blockchain network.

In embodiments, the first network may comprise the one or more devices, each device having a respective device identifier, and wherein the command data comprises a respective identifier of the at least the one of the one or more devices.

In embodiments, the first network may comprise a master layer comprising a master node, one or more intermediary layers each comprising a plurality of intermediate nodes, and a device layer comprising the one or more devices; wherein the first party is the master node or a respective one of the plurality of intermediate nodes, and wherein the second party is a respective one of the plurality of intermediate nodes.

In embodiments, the one or more devices may be Internet-of-Things devices.

Note that the off-chain communication channel may be a transport layer security (TLS) communication channel. Other options include Bluetooth or other near-field communication methods.

The threshold time period may be any suitable time period (e.g. one second, ten seconds, one hour, etc.) and may depend on the particular use case. The second party may set the threshold, or the threshold may be set by a protocol adhered to by the first and second parties.

The control instruction may be transmitted to the at least one of the one or more devices via an off-chain communication channel, which may or may not be the same off-chain communication channel via which the first blockchain transaction is transmitted from the first party to the second party.

The first network and the blockchain network may be different networks. The first network may comprise the one or more devices, each device having a respective device identifier, and wherein the command data comprises a respective identifier of the at least the one of the one or more devices.

## Claims

1. A computer-implemented method for enabling a second party to determine whether to accept a blockchain transaction from a first party, the method being performed by a first party (103a) and comprising:

    generating a first blockchain transaction, wherein the first blockchain transaction comprises an input for unlocking an output of a blockchain transaction previously transmitted to one or more nodes (104) of a blockchain network (106) for inclusion in the blockchain (150);
    generating a signature based on i) the first blockchain transaction and ii) one or more time indicators, each time indicator indicating when the first blockchain transaction was generated and/or transmitted to a second party (103b); and
    transmitting to the second party, the first blockchain transaction, the signature and the one or more time indicators, wherein at least the first blockchain transaction is transmitted to the second party via an off-chain communication channel, and wherein the second party (103b) is configured to accept the first blockchain transaction based on one or more conditions, a first one of the one or more conditions being that the first party (103a) has transmitted the signature and the one or more first time indicators.

2. The method of claim 1, wherein the one or more time indicators comprise a timestamp, and/or a current block height of the blockchain (150).

3. The method of claim 1 or claim 2, wherein the signature and/or the at least one time indicator is transmitted to the second party (103b) via an off-chain communication channel (301).

4. The method of any preceding claim, wherein generating the signature based on the first blockchain transaction comprises generating the signature based on a transaction identifier of the first blockchain transaction.

5. A computer-implemented method of determining whether to accept a blockchain transaction from a first party (103a), the method being performed by a second party (103b) and comprising:

    receiving a first blockchain transaction from the first party (103a) via an off-chain communication channel (301), wherein the first blockchain transaction comprises an input for unlocking an output of a blockchain transaction previously transmitted to one or more nodes (104) of a blockchain network (106) for inclusion in the blockchain (150);
    determining whether the first party (103a) has transmitted, to the second party (103b), (a) a signature generated based on the first blockchain transaction and one or more first time indicators, each first time indicator indicating when the first blockchain transaction was generated and/or transmitted, and (b) the one or more time indicators; and
    accepting the first blockchain transaction based on one or more conditions, a first one of the one or more conditions being that the first party (103a) has transmitted the signature and the one or more first time indicators.

6. The method of claim 5, comprising, determining one or more second time indicators, each second time indicator indicating when the first blockchain transaction was received, and wherein a second one of the one or more conditions is that, based on the first and second time indicators, the first transaction is determined to have been received within a threshold time period of the first transaction being generated and/or transmitted.

7. The method of claim 5 or claim 6, comprising, determining whether the signature has been generated using a private key corresponding to a public key associated with the first party (103a), and wherein a third one of the one or more conditions is that the signature has been generated using the private key corresponding to the public key associated with the first party (103a).

8. The method of any of claims 5 to 7, wherein the first blockchain transaction is a partial blockchain transaction, a partial blockchain transaction being a blockchain transaction that requires one or more inputs and/or one or more inputs to be added to the partial blockchain transaction in order for the partial blockchain transaction to be accepted by one or more nodes (104) of the blockchain network (106) for inclusion in the blockchain (150); and wherein accepting the first blockchain transaction by the second party (103b) comprises:

updating the first blockchain transaction by adding one or more inputs and/or one or more outputs to the first blockchain transaction; and transmitting the first blockchain transaction to the first party (103a) and/or to one or more nodes (104) of the blockchain network (106) for inclusion in the blockchain (150).

9. The method of any of claims 5 to 8, wherein the second party (103b) is configured to control one or more devices (502), wherein the first blockchain transaction comprises an output comprising command data, wherein the command data comprises a command message for causing the second party (103b) to control at least one of the one or more devices (502), and wherein accepting the first blockchain transaction by the second party (103b) comprises transmitting a control instruction to the at least one of the one or more devices (502).

10. The method of claim 8 and claim 9, wherein said updating of the first blockchain transaction is performed in response to said transmitting of the control instruction to the at least one of the one or more devices (502).

11. The method of claim 10, comprising, receiving a command completion message from the at least one of the one or more devices (502), and wherein said updating of the first blockchain transaction is performed in response to receiving the command completion message.

12. The method of any of claims 5 to 11, wherein the first party (103a) and second party (103b) are respective nodes (503) of a first network (501), the first network (501) being a peer-to-peer network, and wherein the first and second parties are respective nodes of the first network (501) and the blockchain network (106).

13. The method of claim 12, wherein the first network (501) comprises a master layer comprising a master node (503a), one or more intermediary layers each comprising a plurality of intermediate nodes (503b, 503c), and a device layer comprising the one or more devices (502a); wherein the first party (103a) is the master node (503a) or a respective one of the plurality of intermediate nodes (503b), and wherein the second party (103b) is a respective one of the plurality of intermediate nodes (503c).

14. Computer equipment comprising:

memory comprising one or more memory units; and processing apparatus comprising one or more processing units, wherein the memory stores code arranged to run on the processing apparatus, the code being configured so as when on the processing apparatus to perform the method of any of claims 1 to 13.

15. A computer program embodied on computer-readable storage and configured so as, when run on computer equipment of claim 14, to perform the method of any of claims 1 to 13.


**Patentansprüche**

1. Computerimplementiertes Verfahren zum Ermöglichen, dass eine zweite Partei bestimmt, ob eine Blockchain-Transaktion von einer ersten Partei angenommen wird, wobei das Verfahren durch eine erste Partei (103a) durchgeführt wird und umfasst:

Erzeugen einer ersten Blockchain-Transaktion, wobei die erste Blockchain-Transaktion eine Eingabe zum Entriegeln einer Ausgabe einer Blockchain-Transaktion, die zuvor an einen oder mehrere Knoten (104) eines Blockchain-Netzwerks (106) zur Einbeziehung in die Blockchain (150) übertragen wurde, umfasst; Erzeugen einer Signatur basierend auf i) der ersten Blockchain-Transaktion und ii) einem oder mehreren Zeitindikatoren, wobei jeder Zeitindikator angibt, wann die erste Blockchain-Transaktion erzeugt und/oder an eine zweite Partei (103b) übertragen wurde; und Übertragen, an die zweite Partei, der ersten Blockchain-Transaktion, der Signatur und des einen oder der mehreren Zeitindikatoren, wobei zumindest die erste Blockchain-Transaktion über einen kettenexternen Kommunikationskanal an die zweite Partei übertragen wird und wobei die zweite Partei (103b) zum Annehmen der ersten Blockchain-Transaktion basierend auf einer oder mehreren Bedingungen ausgelegt ist, wobei eine erste der einen oder der mehreren Bedingungen darin besteht, dass die erste Partei (103a) die Signatur und den einen oder die mehreren ersten Zeitindikatoren übertragen hat.

**2.** Verfahren nach Anspruch 1, wobei der eine oder die mehreren Zeitindikatoren einen Zeitstempel und/oder eine aktuelle Blockhöhe der Blockchain (150) umfassen.

**3.** Verfahren nach Anspruch 1 oder Anspruch 2, wobei die Signatur und/oder der zumindest eine Zeitindikator über einen kettenexternen Kommunikationskanal (301) an die zweite Partei (103b) übertragen werden.

**4.** Verfahren nach einem der vorstehenden Ansprüche, wobei das Erzeugen der Signatur basierend auf der ersten Blockchain-Transaktion ein Erzeugen der Signatur basierend auf einem Transaktionsidentifikator der ersten Blockchain-Transaktion umfasst.

**5.** Computerimplementiertes Verfahren zum Bestimmen, ob eine Blockchain-Transaktion von einer ersten Partei (103a) angenommen wird, wobei das Verfahren durch eine zweite Partei (103b) durchgeführt wird und umfasst:

Empfangen einer ersten Blockchain-Transaktion über einen kettenexternen Kommunikationskanal (301) von der ersten Partei (103a), wobei die erste Blockchain-Transaktion eine Eingabe zum Entriegeln einer Ausgabe einer Blockchain-Transaktion, die zuvor an einen oder mehrere Knoten (104) eines Blockchain-Netzwerks (106) zur Einbeziehung in die Blockchain (150) übertragen wurde, umfasst;
Bestimmen, ob die erste Partei (103a), an die zweite Partei (103b), (a) eine Signatur, die basierend auf der ersten Blockchain-Transaktion und einem oder mehreren ersten Zeitindikatoren erzeugt wird, wobei jeder erste Zeitindikator angibt, wann die erste Blockchain-Transaktion erzeugt und/oder übertragen wurde, und (b) den einen oder die mehreren Zeitindikatoren übertragen hat; und
Annehmen der ersten Blockchain-Transaktion basierend auf einer oder mehreren Bedingungen, wobei eine erste der einen oder der mehreren Bedingungen darin besteht, dass die erste Partei (103a) die Signatur und den einen oder die mehreren ersten Zeitindikatoren übertragen hat.

**6.** Verfahren nach Anspruch 5, umfassend ein Bestimmen eines oder mehrerer zweiter Zeitindikatoren, wobei jeder zweite Zeitindikator angibt, wann die erste Blockchain-Transaktion empfangen wurde, und wobei eine zweite der einen oder der mehreren Bedingungen darin besteht, dass, basierend auf dem ersten und dem zweiten Zeitindikator, bestimmt wird, dass die erste Transaktion innerhalb eines Schwellenzeitraums, in dem die erste Transaktion erzeugt und/oder übertragen wird, empfangen wurde.

**7.** Verfahren nach Anspruch 5 oder Anspruch 6, umfassend ein Bestimmen, ob die Signatur unter Verwendung eines privaten Schlüssels entsprechend einem öffentlichen Schlüssel, der der ersten Partei (103a) zugeordnet ist, erzeugt wurde, und wobei eine dritte der einen oder der mehreren Bedingungen darin besteht, dass die Signatur unter Verwendung des privaten Schlüssels entsprechend dem öffentlichen Schlüssel, der der ersten Partei (103a) zugeordnet ist, erzeugt wurde.

**8.** Verfahren nach einem der Ansprüche 5 bis 7, wobei die erste Blockchain-Transaktion eine teilweise Blockchain-Transaktion ist, wobei eine teilweise Blockchain-Transaktion eine Blockchain-Transaktion ist, die erfordert, dass eine oder mehrere Eingaben und/oder eine oder mehrere Eingaben zur teilweisen Blockchain-Transaktion addiert werden, damit die teilweise Blockchain-Transaktion durch einen oder mehrere Knoten (104) des Blockchain-Netzwerks (106) zur Einbeziehung in die Blockchain (150) angenommen wird; und wobei das Annehmen der ersten Blockchain-Transaktion durch die zweite Partei (103b) umfasst:

Aktualisieren der ersten Blockchain-Transaktion durch Addieren einer oder mehrerer Eingaben und/oder einer oder mehrerer Ausgaben zur ersten Blockchain-Transaktion; und
Übertragen der ersten Blockchain-Transaktion an die erste Partei (103a) und/oder an einen oder mehrere Knoten (104) des Blockchain-Netzwerks (106) zur Einbeziehung in die Blockchain (150).

**9.** Verfahren nach einem der Ansprüche 5 bis 8, wobei die zweite Partei (103b) zum Steuern einer oder mehrerer Vorrichtungen (502) ausgelegt ist, wobei die erste Blockchain-Transaktion eine Ausgabe, umfassend Befehlsdaten, umfasst, wobei die Befehlsdaten eine Befehlsnachricht zum Veranlassen der zweiten Partei (103b), zumindest eine der einen oder der mehreren Vorrichtungen (502) zu steuern, umfassen und wobei das Annehmen der ersten Blockchain-Transaktion durch die zweite Partei (103b) ein Übertragen einer Steueranweisung an die zumindest eine der einen oder der mehreren Vorrichtungen (502) umfasst.

**10.** Verfahren nach Anspruch 8 und Anspruch 9, wobei das Aktualisieren der ersten Blockchain-Transaktion als Reaktion auf das Übertragen der Steueranweisung an die zumindest eine der einen oder der mehreren Vorrichtungen (502) durchgeführt wird.

**11.** Verfahren nach Anspruch 10, umfassend ein Empfangen einer Befehlsdurchführungsnachricht von der zumindest einen der einen oder der mehreren Vorrichtungen (502), und wobei das Aktualisieren der ersten Blockchain-Transaktion als Reaktion auf das Empfangen der Befehlsdurchführungsnachricht durchgeführt wird.

12. Verfahren nach einem der Ansprüche 5 bis 11, wobei die erste Partei (103a) und die zweite Partei (103b) jeweilige Knoten (503) eines ersten Netzwerks (501) sind, wobei das erste Netzwerk (501) ein Peer-to-Peer-Netzwerk ist und wobei die erste und die zweite Partei jeweilige Knoten des ersten Netzwerks (501) und des Blockchain-Netzwerks (106) sind.

13. Verfahren nach Anspruch 12, wobei das erste Netzwerk (501) eine Hauptschicht, umfassend einen Hauptknoten (503a), eine oder mehrere Zwischenschichten, die jeweils eine Vielzahl von Zwischenknoten (503b, 503c) umfassen, und eine Vorrichtungsschicht, umfassend die eine oder die mehreren Vorrichtungen (502a), umfasst; wobei die erste Partei (103a) der Hauptknoten (503a) oder ein jeweiliger der Vielzahl von Zwischenknoten (503b) ist und wobei die zweite Partei (103b) ein jeweiliger der Vielzahl von Zwischenknoten (503c) ist.

14. Computerausrüstung, umfassend:

Speicher, umfassend eine oder mehrere Speichereinheiten; und
eine Verarbeitungseinrichtung, umfassend eine oder mehrere Verarbeitungseinheiten, wobei der Speicher Code speichert, der zur Ausführung auf der Verarbeitungseinrichtung angeordnet ist, wobei der Code derart ausgelegt ist, dass er, wenn er sich auf der Verarbeitungseinrichtung befindet, das Verfahren nach einem der Ansprüche 1 bis 13 durchführt.

15. Computerprogramm, das auf einem computerlesbaren Speicher verkörpert und derart ausgelegt ist, dass es, wenn es auf einer Computerausrüstung nach Anspruch 14 ausgeführt wird, das Verfahren nach einem der Ansprüche 1 bis 13 durchführt.

**Revendications**

1. Procédé mis en œuvre par ordinateur pour permettre à une deuxième partie de déterminer si elle doit accepter une transaction de chaîne de blocs d'une première partie, le procédé étant exécuté par une première partie (103a) et comprenant les étapes suivantes :

générer une première transaction de chaîne de blocs, où la première transaction de chaîne de blocs comprend une entrée pour déverrouiller une sortie d'une transaction de chaîne de blocs précédemment transmise à un ou plusieurs noeuds (104) d'un réseau de chaîne de blocs (106) pour inclusion dans la chaîne de blocs (150) ;
générer une signature sur la base i) de la première transaction de chaîne de blocs et ii) d'un ou plusieurs indicateurs de temps, chaque indicateur de temps indiquant le moment où la première transaction de chaîne de blocs a été générée et/ou transmise à une deuxième partie (103b) ; et
transmettre à la deuxième partie la première transaction de chaîne de blocs, la signature et les un ou plusieurs indicateurs de temps, où au moins la première transaction de chaîne de blocs est transmise à la deuxième partie par l'intermédiaire d'un canal de communication hors chaîne, et où la deuxième partie (103b) est configurée pour accepter la première transaction de chaîne de blocs sur la base d'une ou plusieurs conditions, une première des une ou plusieurs conditions étant que la première partie (103a) a transmis la signature et les un ou plusieurs premiers indicateurs de temps.

2. Procédé selon la revendication 1, dans lequel les un ou plusieurs indicateurs de temps comprennent un horodatage, et/ou une hauteur de bloc courant de la chaîne de blocs (150).

3. Procédé selon la revendication 1 ou la revendication 2, dans lequel la signature et/ou l'au moins un indicateur de temps sont transmis à la deuxième partie (103b) par l'intermédiaire d'un canal de communication hors chaîne (301).

4. Procédé selon l'une quelconque des revendications précédentes, dans lequel la génération de la signature sur la base de la première transaction de chaîne de blocs comprend la génération de la signature sur la base d'un identifiant de transaction de la première transaction de chaîne de blocs.

5. Procédé mis en œuvre par ordinateur pour déterminer s'il faut accepter une transaction de chaîne de blocs d'une première partie (103a), le procédé étant exécuté par une deuxième partie (103b) et comprenant les étapes suivantes :

recevoir une première transaction de chaîne de blocs de la première partie (103a) par l'intermédiaire d'un canal de communication hors chaîne (301), où la première transaction de chaîne de blocs comprend une entrée pour déverrouiller une sortie d'une transaction de chaîne de blocs précédemment transmise à un ou plusieurs noeuds (104) d'un réseau de chaîne de blocs (106) pour inclusion dans la chaîne de blocs (150) ;

déterminer si la première partie (103a) a transmis à la deuxième partie (103b) (a) une signature générée sur la base de la première transaction de chaîne de blocs et un ou plusieurs premiers indicateurs de temps, chaque premier indicateur de temps indiquant le moment où la première transaction de chaîne de blocs a été générée et/ou transmise, et (b) un ou plusieurs indicateurs de temps ; et

accepter la première transaction de chaîne de blocs sur la base d'une ou plusieurs conditions, une première des une ou plusieurs conditions étant que la première partie (103a) a transmis la signature et les un ou plusieurs premiers indicateurs de temps.

6. Procédé selon la revendication 5 comprenant de déterminer un ou plusieurs deuxièmes indicateurs de temps, chaque deuxième indicateur de temps indiquant quand la première transaction de chaîne de blocs a été reçue, et dans lequel une deuxième des une ou plusieurs conditions est que, sur la base des premiers et deuxièmes indicateurs de temps, la première transaction est déterminée comme ayant été reçue dans une période de temps seuil de la première transaction étant générée et/ou transmise.

7. Procédé selon la revendication 5 ou la revendication 6 comprenant de déterminer si la signature a été générée en utilisant une clé privée correspondant à une clé publique associée à la première partie (103a), et dans lequel une troisième des une ou plusieurs conditions est que la signature a été générée en utilisant la clé privée correspondant à la clé publique associée à la première partie (103a).

8. Procédé selon l'une quelconque des revendications 5 à 7, dans lequel la première transaction de chaîne de blocs est une transaction de chaîne de blocs partielle, une transaction de chaîne de blocs partielle étant une transaction de chaîne de blocs qui nécessite une ou plusieurs entrées et/ou une ou plusieurs entrées à ajouter à la transaction de chaîne de blocs partielle afin que la transaction de chaîne de blocs partielle soit acceptée par un ou plusieurs noeuds (104) du réseau de chaîne de blocs (106) pour inclusion dans la chaîne de blocs (150) ; et dans lequel l'acceptation de la première transaction de chaîne de blocs par la deuxième partie (103b) comprend les étapes suivantes :

mettre à jour la première transaction de chaîne de blocs en ajoutant une ou plusieurs entrées et/ou une ou plusieurs sorties à la première transaction de chaîne de blocs ; et

transmettre la première transaction de chaîne de blocs à la première partie (103a) et/ou à un ou plusieurs noeuds (104) du réseau de chaîne de blocs (106) pour inclusion dans la chaîne de blocs (150).

9. Procédé selon l'une quelconque des revendications 5 à 8, dans lequel la deuxième partie (103b) est configurée pour contrôler un ou plusieurs dispositifs (502), dans lequel la première transaction de chaîne de blocs comprend une sortie comprenant des données de commande, dans lequel les données de commande comprennent un message de commande pour amener la deuxième partie (103b) à contrôler au moins un des un ou plusieurs dispositifs (502), et dans lequel l'acceptation de la première transaction de chaîne de blocs par la deuxième partie (103b) comprend de transmettre une instruction de commande à l'au moins un des un ou plusieurs dispositifs (502) .

10. Procédé selon la revendication 8 et la revendication 9, dans lequel ladite mise à jour de la première transaction de chaîne de blocs est effectuée en réponse à ladite transmission de l'instruction de commande à l'un au moins des un ou plusieurs dispositifs (502).

11. Procédé selon la revendication 10 comprenant de recevoir un message d'achèvement de commande de l'au moins un des un ou plusieurs dispositifs (502), et dans lequel ladite mise à jour de la première transaction de chaîne de blocs est effectuée en réponse à la réception du message d'achèvement de commande.

12. Procédé selon l'une quelconque des revendications 5 à 11, dans lequel la première partie (103a) et la deuxième partie (103b) sont des noeuds respectifs (503) d'un premier réseau (501), le premier réseau (501) étant un réseau pair-à-pair, et dans lequel les première et deuxième parties sont des noeuds respectifs du premier réseau (501) et du réseau de chaîne de blocs (106).

13. Procédé selon la revendication 12, dans lequel le premier réseau (501) comprend une couche maîtresse comprenant un noeud maître (503a), une ou plusieurs couches intermédiaires comprenant chacune une pluralité de noeuds intermédiaires (503b, 503c), et une couche de dispositifs comprenant les un ou plusieurs dispositifs (502a) ; dans lequel la première partie (103a) est le noeud maître (503a) ou un noeud respectif de la pluralité de noeuds intermédiaires (503b), et dans lequel la deuxième partie (103b) est un noeud respectif de la pluralité de noeuds intermédiaires (503c).

14. Équipement informatique comprenant :

une mémoire comprenant une ou plusieurs unités de mémoire ; et

un appareil de traitement comprenant une ou plusieurs unités de traitement, dans lequel la mémoire stocke un code conçu pour être exécuté sur l'appareil de traitement, le code étant configuré de manière à exécuter le procédé de l'une quelconque des revendications 1 à 13 lorsqu'il est exécuté sur l'appareil de traitement.

15. Programme informatique incorporé dans une mémoire lisible par ordinateur et configuré de telle sorte que, lorsqu'il est exécuté sur l'équipement informatique de la revendication 14, il exécute le procédé de l'une quelconque des revendications 1 à 13.

# Figure 1

# Figure 2

152i

152j

202    $Tx_0$    201

$Tx_1$    201    203

| $TxID_0$ | | |
|---|---|---|
| **Input(s)** | **Output(s)** | |
| <u>Input</u><br>• Pointer to previous $Tx$<br>• Index of UTXO in previous $Tx$<br>• Unlocking script for unlocking from previous party | <u>$UTXO_0$</u><br>• Amount<br>• Locking script locking to Alice | 203 |
| | ⋮ | |
| ⋮<br>Optional further inputs<br>⋮ | Optional further $UTXOs$<br>⋮ | |

| $TxID_1$ | | |
|---|---|---|
| **Input(s)** | **Output(s)** | |
| <u>Input</u><br>• Pointer to $Tx_0$<br>• Index of $UTXO_0$ [within $Tx_0$]<br>• Unlocking script for unlocking $UTXO_0$ from Alice | <u>$UTXO_1$</u><br>• Amount<br>• Locking script locking to Bob | |
| ⋮<br>Optional further inputs<br>⋮ | ⋮<br>Optional further $UTXOs$<br>⋮ | |

202

203

Transaction
from Alice to Bob

Validated by running: Alice's locking script (from output of $Tx_0$), together with Alice's unlocking script (as input to $Tx_1$). This checks that $Tx_1$ meets the condition(s) defined in Alice's locking script.

# Figure 3

# Figure 4A

Client application — 105

UI layer — 402

Transaction engine — 401

— 403

# Figure 4B

Client app (Alice) — 400

413

412

411

# Figure 5

# Figure 6

# Figure 7a

| Tx1 (partial) | | | |
|---|---|---|---|
| Inputs | | Outputs | |
| Value | Input Script | Value | Output Script |
| $x$ | $<Sig_{PK0}> \ <PK_0>$ | 0 | OP_FALSE OP_RETURN 0x4d494f54 <br> <Command data> |
|  |  |  |  |

# Figure 7b

| Tx1 (complete) | | | |
|---|---|---|---|
| Inputs | | Outputs | |
| Value | Input Script | Value | Output Script |
| $x$ | $<Sig_{PK0}> \ <PK_0>$ | 0 | OP_FALSE OP_RETURN 0x4d494f54 <br> <Command data> |
| $>0$ | $<Sig_{PK1}> \ <PK_1>$ | $x$ | OP_DUP OP_HASH160 $<H_{160}(PK_1)>$ <br> OP_EQUALVERIFY OP_CHECKSIG |

# Figure 8a

| Tx1 (partial) | | | |
|---|---|---|---|
| Inputs | | Outputs | |
| Value | Input Script | Value | Output Script |
| $x$ | $<Sig_{PK0}>\ <PK_0>$ | 0 | OP_FALSE OP_RETURN 0x4d494f54 <br> <Command data> |
| | | $x + \delta$ | OP_DUP OP_HASH160 $<H_{160}(PK_1)>$ <br> OP_EQUALVERIFY OP_CHECKSIG |

# Figure 8b

| Tx1 (complete) | | | |
|---|---|---|---|
| Inputs | | Outputs | |
| Value | Input Script | Value | Output Script |
| $x$ | $<Sig_{PK0}>\ <PK_0>$ | 0 | OP_FALSE OP_RETURN 0x4d494f54 <br> <Command data> |
| $> \delta$ | $<Sig_{PK1}>\ <PK_1>$ | $x$ | OP_DUP OP_HASH160 $<H_{160}(PK_1)>$ <br> OP_EQUALVERIFY OP_CHECKSIG |

# Figure 9

# Figure 10a

# Figure 10b

**EP 4 088 499 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHONG et al.** *A Flexible Instant Payment System Based on Blockchain,* 2019
- **GUDGEON et al.** *Sok: Off The Chain Transactions,* 2019
- **POON et al.** *The Bitcoin Lighting Network: Scalable Off-Chain Instant Payments,* 2016